# EUROPEAN PATENT APPLICATION

(11) **EP 4 778 756 A2**
(43) Date of publication of application: **22.07.2026**
(21) Application number: 26183706.6
(22) Date of filing: 19.02.2024
(51) Int. Cl.: B60K 11/02

(54) **THERMAL MANAGEMENT SYSTEM**

(30) Priority: 09.03.2023 JP 2023036646
(62) Divisional of application: 24158267.5
(71) Applicant: Toyota Jidosha Kabushiki Kaisha, Toyota-shi, Aichi-ken 471-8571 (JP)
(72) Inventor: SUZUKI, Tomoaki, 471-8571 AICHI-KEN (FR)
(74) Representative: Cabinet Beau de Loménie

(57) **Abstract**

A thermal management system (1) includes a first flow path (170b), a second flow path (130b), a third flow path (130a), a fourth flow path (170a), an energy storage device (173), a drive device (133), a radiator (122), a chiller (160), and switching devices (180, 190). Each flow path is configured to allow a heat medium to flow therethrough. The switching devices (180, 190) are configured to switch the connection state between the first flow path (170b), the second flow path (130b), the third flow path (130a), and the fourth flow path (170a). A reference communication pattern of a switching circuit is a pattern in which the first flow path (170b) is disconnected from and independent of the second flow path (130b), third flow path (130a), and fourth flow path (170a), the second flow path (130b) is connected to the third flow path (130a) and the fourth flow path (170a), and the third flow path (130a) is connected to the fourth flow path (170a). The switching devices (180, 190) are configured to cause the reference communication pattern formed.

## Description

### BACKGROUND OF THE INVENTION

### 1. Field of the Invention

The present disclosure relates to thermal management systems.

### 2. Description of Related Art

Japanese Unexamined Patent Application Publication No. 2010-272395 (JP 2010-272395 A) discloses an electrified vehicle. The electrified vehicle includes an energy storage device (battery), an inverter, and a motor. The energy storage device is connected to the inverter. The motor is connected to the inverter and generates a driving force for the electrified vehicle. The current of the energy storage device is controlled by controlling switching of the inverter. Heat is thus generated due to power loss in the internal resistance of the energy storage device.

### SUMMARY OF THE INVENTION

A thermal management system that is mounted on an electrical apparatus such as an electrified vehicle includes a plurality of flow paths through which a heat medium flows, an energy storage device, a drive device (motor and inverter), a radiator, a chiller device, and a switching device (e.g., a switching valve). The energy storage device, the drive device, the radiator, and the chiller device are provided in different flow paths. The switching device switches the connection state between the flow paths.

If the switching device is not switched properly, heat from the energy storage device may be taken by the heat medium in a different flow path. In addition, in an electrified vehicle, it is important to effectively use heat generated by the drive device.

The present disclosure provides a thermal management system that allows effective use of heat generated by a drive device of an electrical apparatus while reducing or eliminating the possibility of heat being taken from an energy storage device.

A thermal management system according to an aspect of the present disclosure is mounted on an electrical apparatus. The thermal management system includes: a first flow path, a second flow path, a third flow path, and a fourth flow path; an energy storage device; a drive device; a radiator; a chiller device, and a switching device. Each of the first, second, third, and fourth flow paths is configured to allow a heat medium to flow therethrough. The energy storage device is configured to exchange heat with the heat medium. The drive device is configured to exchange heat with the heat medium in the second flow path and generate a driving force. The radiator is located in the third flow path. The chiller device is located in the fourth flow path. The switching device is configured to switch a connection state between the first flow path, the second flow path, the third flow path, and the fourth flow path. The switching device is configured to cause a switching circuit formed. The switching circuit is a circuit in which the first flow path is disconnected from and independent of the second flow path, the third flow path, and the fourth flow path, the second flow path is connected to the third flow path and the fourth flow path, and the third flow path is connected to the fourth flow path.

With the above configuration, the first flow path is independent. This can reduce or eliminate the possibility of heat from the energy storage device being taken by the heat medium in the second flow path, the third flow path, and the fourth flow path. Moreover, heat generated by the drive device can be stored in the heat medium in the second flow path, the third flow path, and the fourth flow path. It is therefore possible to allow effective use of heat generated by the drive device of the electrical apparatus while reducing or eliminating the possibility of heat being taken from the energy storage device.

In the thermal management system of the above aspect, the electrical apparatus may be an electrified vehicle.

In the thermal management system of the above aspect, the switching device may be configured to cause the switching circuit formed when performing heating of the energy storage device by causing a current to flow through the energy storage device.

With the above configuration, the heating (self-heating) of the energy storage device is performed while the first flow path is disconnected from the second flow path, the third flow path, and the fourth flow path. This reduces or eliminates the possibility that heat generated by the energy storage device due to the self-heating may be transferred to the second flow path, the third flow path, and the fourth flow path via the heat medium. As a result, the possibility of heat being taken from the energy storage device during the heating can be reduced or eliminated. Therefore, the heating can be effectively performed.

In the thermal management system of the above aspect, the energy storage device may be heated after a traction system of the electrified vehicle is activated. In the thermal management system of the above aspect, the energy storage device may be configured to be externally chargeable with charging power supplied from charging equipment external to the electrified vehicle. The energy storage device may be heated at start of being externally charged in such a manner that a temperature of the energy storage device becomes equal to or higher than a predetermined temperature. As used herein, "at the start of the external charging" refers to when the charging power begins to be supplied to the energy storage device.

The thermal management system of the above aspect may further include a grille shutter. The grille shutter may be configured to open and close and to adjust an amount of heat that is dissipated from the radiator to outside of the electrified vehicle. The grille shutter may be in a closed state when the switching circuit is formed.

When the grille shutter is in the closed state, the amount of heat that is dissipated from the radiator to the outside of the electrical apparatus is smaller than when the grille shutter is in an open state. With the above configuration, the amount of heat that is dissipated from the radiator to the outside of the electrical apparatus can be reduced. Heat generated by the drive device can thus be effectively stored in the heat medium in the second flow path, the third flow path, and the fourth flow path.

The thermal management system of the above aspect may further include a temperature sensor configured to detect a temperature related to a temperature of the drive device. The switching circuit may be formed when a detected value from the temperature sensor exceeds a reference value.

With the above configuration, heat from the drive device is dissipated through the radiator. Overheating of the drive device can thus be avoided.

In the thermal management system of the above aspect, the grille shutter may be switched from the closed state to the open state when the detected value from the temperature sensor exceeds a threshold higher than the reference value.

With the above configuration, dissipation of heat from the drive device or the heat medium in the second flow path to the outside of the electrical apparatus via the radiator is further facilitated. Overheating of the drive device or the heat medium in the second flow path can thus be effectively avoided.

The thermal management system of the above aspect may further include a heating circuit configured to exchange heat via the chiller device and to heat a vehicle cabin of the electrified vehicle. When heating of the vehicle cabin is requested, heat from the drive device may be supplied to the heating circuit via the chiller device as the heating circuit is driven with the switching circuit formed.

With the above configuration, heat from the drive device (heat stored in the heat medium in the second flow path) is supplied to the heating circuit via the chiller device in response to a request. Such heat can thus be used to heat the vehicle cabin.

The thermal management system of the above aspect may further include a first temperature sensor and a second temperature sensor. The first temperature sensor may be configured to detect a temperature of the energy storage device. The second temperature sensor may be configured to detect a temperature of the heat medium in the second flow path. The switching device may be configured to be switched in such a manner that the first flow path is connected to the second flow path when a detected value from the second temperature sensor exceeds a detected value from the first temperature sensor during the heating of the energy storage device with the switching circuit formed.

The thermal management system of the above aspect may further include a control device. The control device may be configured to control the switching device to cause the switching circuit formed.

After the detected value from the second temperature sensor exceeds the detected value from the first temperature sensor, the temperature of the heat medium in the second flow path is higher than the temperature of the energy storage device. With the above configuration, heat stored in the heat medium in the second flow path is transferred to the energy storage device, so that the energy storage device is heated. As a result, the heating of the energy storage device can further be facilitated.

According to the present disclosure, it is possible to allow effective use of heat generated by the drive device of the electrical apparatus while reducing or eliminating the possibility of heat being taken from the energy storage device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows an electrified vehicle equipped with a thermal management system according to the present disclosure;
FIG. 2 shows an example of the overall configuration of a thermal management system 1 according to a first embodiment of the present disclosure;
FIG. 3 shows an example of the configuration of a thermal management circuit according to the first embodiment;
FIG. 4 is a conceptual diagram showing an overview of a reference communication pattern of the thermal management circuit that is formed by controlling two five-way valves;
FIG. 5 is a flowchart illustrating a process that is performed by an electronic control unit (ECU) according to the first embodiment;
FIG. 6 is a flowchart illustrating a process that is performed by the ECU according a first modification of the first embodiment;
FIG. 7 is a flowchart illustrating a process that is performed by the ECU according a second modification of the first embodiment;
FIG. 8 illustrates another example of the reference communication pattern of the thermal management circuit;
FIG. 9 shows an example of the overall configuration of a thermal management system 2 according to a second embodiment of the present disclosure;
FIG. 10 shows an example of the configuration of a thermal management circuit according to the second embodiment;
FIG. 11A is a conceptual diagram showing an overview of an initial communication pattern formed by a ten-way valve;
FIG. 11B is a conceptual diagram showing an overview of the initial communication pattern formed by the ten-way valve;
FIG. 12A is a conceptual diagram showing an overview of a reference communication pattern formed by the ten-way valve;
FIG. 12B is a conceptual diagram showing an overview of the reference communication pattern formed by the ten-way valve;
FIG. 13 is a flowchart illustrating a control method of the thermal management system 2;
FIG. 14 shows an example of the overall configuration of a thermal management system 3 according to a third embodiment;
FIG. 15 shows an example of the configuration of a thermal management circuit according to the third embodiment;
FIG. 16 is a conceptual diagram showing an overview of an initial communication pattern of the thermal management circuit that is formed by controlling two six-way valves;
FIG. 17 is a conceptual diagram showing an overview of a reference communication pattern of the thermal management circuit that is formed by controlling the two six-way valves;
FIG. 18 is a flowchart illustrating a control method of the thermal management system 3;
FIG. 19 illustrates another example of the reference communication pattern of the thermal management circuit;
FIG. 20 illustrates still another example of the reference communication pattern of the thermal management circuit;
FIG. 21 illustrates yet another example of the reference communication pattern of the thermal management circuit;
FIG. 22 is a flowchart illustrating a process that is performed by the ECU according a modification;
FIG. 23 shows another example of the thermal management circuit;
FIG. 24 shows still another example of the thermal management circuit; and
FIG. 25 shows a circuit configuration including a battery, a converter, an inverter, and a motor.

### DETAILED DESCRIPTION OF EMBODIMENTS

Embodiments of the present disclosure will be described in detail below with reference to the drawings. The same or corresponding parts are denoted by the same signs throughout the drawings, and description thereof will not be repeated. The embodiments and modifications thereof may be combined as appropriate.

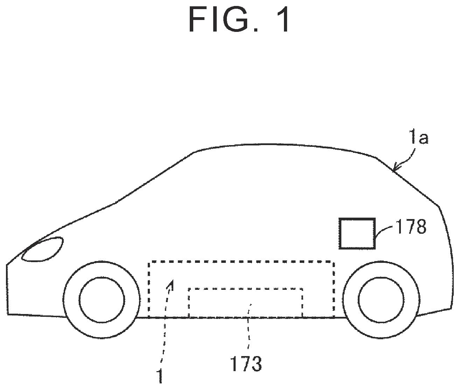

FIG. 1 shows an electrified vehicle equipped with a thermal management system according to the present disclosure. Referring to FIG. 1, an electrified vehicle 1a is a battery electric vehicle (BEV), and includes a battery 173 and an inlet 178. The battery 173 stores traction power for the electrified vehicle 1a. The battery 173 is configured to be charged externally with charging power supplied through the inlet 178 from charging equipment (not shown) external to the electrified vehicle 1a. The electrified vehicle 1a is an example of the "electrical apparatus" of the present disclosure.

### First Embodiment

### Overall Configuration

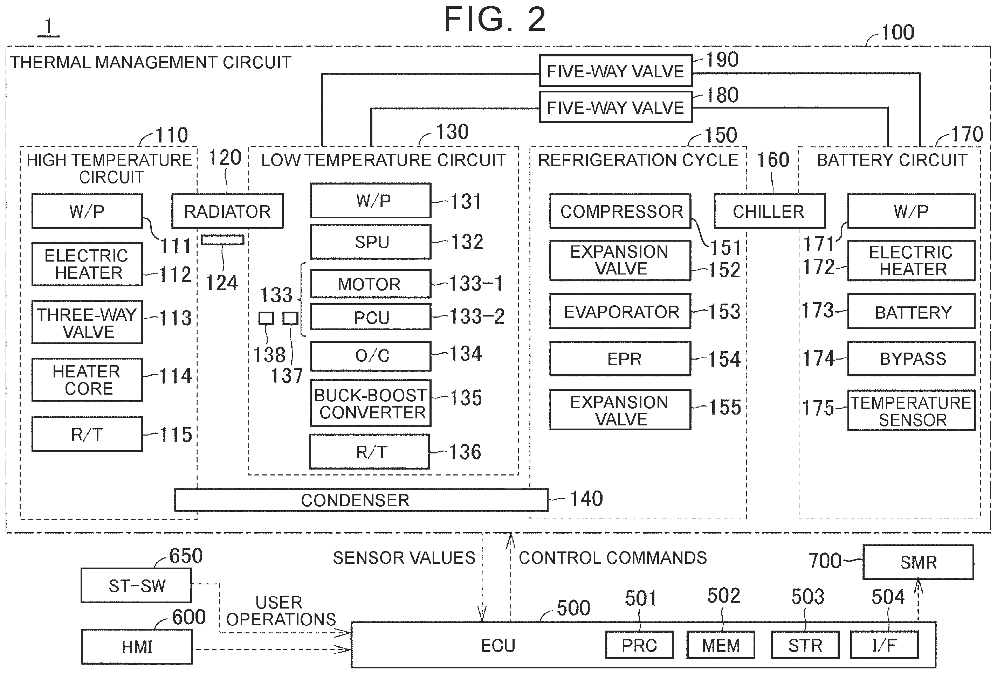

FIG. 2 shows an example of the overall configuration of a thermal management system 1 according to the first embodiment of the present disclosure. The thermal management system 1 includes a thermal management circuit 100, an electronic control unit (ECU) 500, a human machine interface (HMI) 600, a start switch (ST-SW) 650, and a system main relay (SMR) 700.

The thermal management circuit 100 is configured so that a heat medium flows therethrough. The thermal management circuit 100 includes a high temperature circuit 110, a radiator 120, a grille shutter 124, a low temperature circuit 130, a condenser 140, a refrigeration cycle 150, a chiller 160, a battery circuit 170, a five-way valve 180, and a five-way valve 190. The five-way valves 180, 190 are an example of the "switching device" of the present disclosure. The chiller 160 is an example of the "chiller device" of the present disclosure.

The high temperature circuit 110 is an example of the "heater circuit" of the present disclosure, and includes a water pump (W/P) 111, an electric heater 112, a three-way valve 113, a heater core 114, and a reservoir tank (R/T) 115.

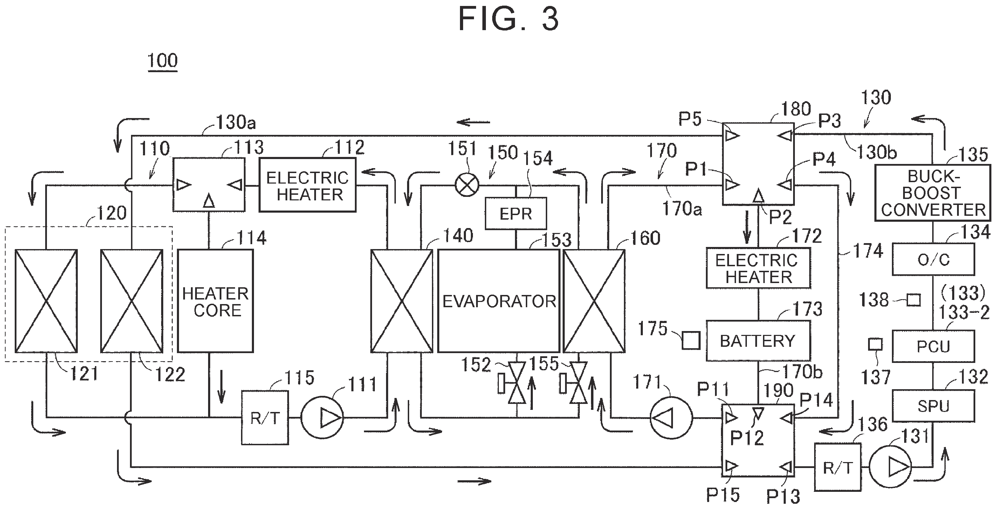

The radiator 120 is connected to (i.e., shared by) both the high temperature circuit 110 and the low temperature circuit 130. The radiator 120 includes a high temperature (HT) radiator 121 and a low temperature (LT) radiator 122 (see FIG. 3). The low temperature radiator 122 exchanges heat between the heat medium flowing in the low temperature circuit 130 and outside air. The low temperature radiator 122 is an example of the "radiator" of the present disclosure. The grille shutter 124 is mounted for the radiator 120. The grille shutter 124 is configured to open and close according to a command from the ECU 500, and is configured to adjust the amount of heat that is dissipated from the radiator 120 to the outside of the electrified vehicle 1a.

The low temperature circuit 130 includes a water pump 131, a smart power unit (SPU) 132, a motor 133-1, a power control unit (PCU) 133-2, an oil cooler (O/C) 134, a buck-boost converter 135, a reservoir tank 136, and temperature sensors 137, 138. The PCU 133-2 includes a converter and an inverter. The motor 133-1 and the PCU 133-2 are also referred to as "transaxle 133." The transaxle 133 is configured to be connected to the battery 173, and is configured to generate a driving force for the electrified vehicle 1a. The transaxle 133 is an example of the "drive device" of the present disclosure. The temperature sensor 137 may be an example of the "temperature sensor." The temperature sensor 138 may be an example of the "temperature sensor," and is also an example of the "second temperature sensor."

The condenser 140 is connected to both the high temperature circuit 110 and the refrigeration cycle 150.

The refrigeration cycle 150 includes a compressor 151, an expansion valve 152, an evaporator 153, an evaporative pressure regulator (EPR) 154, and an expansion valve 155.

The chiller 160 is connected to both the refrigeration cycle 150 and the battery circuit 170. The chiller 160 exchanges heat between the heat medium flowing in the battery circuit 170 and the heat medium circulating in the refrigeration cycle 150.

The battery circuit 170 includes a water pump 171, an electric heater 172, a battery 173, a bypass path 174, and a temperature sensor 175. The battery 173 is an example of the "energy storage device" of the present disclosure. The temperature sensor 175 is an example of the "first temperature sensor" of the present disclosure.

Each of the five-way valves 180, 190 is connected to the low temperature circuit 130 and the battery circuit 170. The configuration of the thermal management circuit 100 will be described in detail later with reference to FIG. 3.

The ECU 500 controls the thermal management circuit 100. The ECU 500 includes a processor 501, a memory 502, a storage 503, and an interface 504.

The processor 501 is, for example, a central processing unit (CPU). The memory 502 is, for example, a random access memory (RAM). The storage 503 is a rewritable nonvolatile memory such as a hard disk drive (HDD) or a solid state drive (SSD). The storage 503 stores system programs including an operating system (OS), and control programs including computer-readable codes that are necessary for control calculations. The processor 501 implements various processes by reading the system programs and the control programs, loading them into the memory 502, and executing them. The interface 504 allows communication between the ECU 500 and components of the thermal management circuit 100.

The ECU 500 generates control commands based on sensor values acquired from various sensors (e.g., battery temperature sensor 175) included in the thermal management circuit 100, user operations received by the HMI 600 or the start switch 650, etc. The ECU 500 outputs the generated control commands to various circuits (various devices) of the electrified vehicle 1a such as the thermal management circuit 100.

The ECU 500 is configured to control the current of the battery 173 (perform charge control or discharge control) by controlling switching of the inverter of the PCU 133-2. The ECU 500 thus controls heat that is generated due to power loss in the internal resistance of the battery 173. As a result, the ECU 500 can perform a heating control for increasing the temperature of the battery 173 (perform heating of the battery 173) by causing a current to flow through the battery 173 (by charging or discharging) (self-heating of the battery 173). For example, the ECU 500 performs the heating control after a traction system (described later) of the electrified vehicle 1a is activated. The ECU 500 is also configured to control the five-way valves 180, 190, control on and off of the SMR 700, and perform an external charging control for controlling external charging.

The HMI 600 receives user operations for controlling the thermal management system 1. The user operations include a heating request operation for heating the vehicle cabin of the electrified vehicle 1a. Heating the vehicle cabin also includes pre-heating that starts at the time scheduled by a user. The HMI 600 outputs signals indicating user operations to the ECU 500.

The SMR 700 is located between the transaxle 133 (specifically, the PCU 133-2) and the battery 173.

The start switch 650 is operated by the user to activate the traction system of the electrified vehicle 1a. The traction system is composed of the transaxle 133, the battery 173, and the SMR 700. When the start switch 650 is operated, the ECU 500 turns on the SMR 700 (switches the SMR 700 from the open state to the closed state). The transaxle 133 is thus connected to the battery 173 via the SMR 700. As a result, the traction system is activated. As described above, activating the traction system is equivalent to turning on the SMR 700.

### Configuration of Thermal Management Circuit

FIG. 3 shows an example of the configuration of the thermal management circuit 100 according to the first embodiment. The high temperature circuit 110 is formed so that it can exchange heat with the heat medium in a flow path 130b via the condenser 140, the refrigeration cycle 150, the chiller 160, and the five-way valves 180, 190, and is configured to heat the vehicle cabin of the electrified vehicle 1a. The heat medium (usually hot water) circulating in the high temperature circuit 110 flows through either or both of a first path and a second path. The first path is a path of "water pump 111 - condenser 140 - electric heater 112 - three-way valve 113 - heater core 114 - reservoir tank 115 - water pump 111." The second path is a path of "water pump 111 - condenser 140 - electric heater 112 - three-way valve 113 - high temperature radiator 121 - reservoir tank 115 - water pump 111."

The heat medium (coolant) circulating in the low temperature circuit 130 flows through the following path: "water pump 131 - SPU 132 - PCU 133-2 (transaxle 133) - oil cooler 134 - buck-boost converter 135 - five-way valve 180 - low temperature radiator 122 - five-way valve 190 - reservoir tank 136 - water pump 131."

The water pump 131 circulates the heat medium in the low temperature circuit 130 according to a control command from the ECU 500. The SPU 132 controls charge and discharge of the battery 173 according to a control command from the ECU 500. The PCU 133-2 converts direct current (DC) power supplied from the battery 173 to alternating current (AC) power to supply the AC power to the motor 133-1 according to a control command from the ECU 500. The oil cooler 134 circulates lubricating oil for the motor 133-1 by using an electrical oil pump (EOP) (not shown). The oil cooler 134 cools the motor 133-1 (transaxle 133) through heat exchange between the heat medium circulating in the low temperature circuit 130 and the lubricating oil for the motor 133-1.

The temperature sensor 137 detects the temperature of the transaxle 133 (specifically, the PCU 133-2). The temperature sensor 138 is located downstream of the transaxle 133 in the flow path 130b (described later), and detects the temperature of the heat medium in the flow path 130b. The SPU 132, the PCU 133-2, the oil cooler 134, and the buck-boost converter 135 are cooled by the heat medium circulating in the low temperature circuit 130.

The reservoir tank 136 stores part of the heat medium flowing in the low temperature circuit 130 to maintain the pressure and amount of heat medium in the low temperature circuit 130. Each of the five-way valves 180, 190 switches the path of the heat medium in the low temperature circuit 130 and the battery circuit 170 according to a control command from the ECU 500. The low temperature radiator 122 is disposed near the high temperature radiator 121, and exchanges heat with the high temperature radiator 121.

The heat medium (gas-phase refrigerant or liquid-phase refrigerant) circulating in the refrigeration cycle 150 flows through either or both of a first path and a second path. The first path is a path of "compressor 151 - condenser 140 - expansion valve 152 - evaporator 153 - EPR 154 - compressor 151." The second path is a path of "compressor 151 - condenser 140 - expansion valve 155 - chiller 160 - compressor 151."

The heat medium (coolant) circulating in the battery circuit 170 flows through either or both of a first path and a second path. The first path is a path of "water pump 171 - chiller 160 - five-way valve 180 - electric heater 172 - battery 173 - five-way valve 190 - water pump 171." The second path is a path of "water pump 171 - chiller 160 - five-way valve 180 - bypass path 174 - five-way valve 190 - water pump 171."

The water pump 171 circulates the heat medium in the battery circuit 170 according to a control command from the ECU 500. The chiller 160 cools the heat medium circulating in the battery circuit 170 through heat exchange between the heat medium circulating in the refrigeration cycle 150 and the heat medium circulating in the battery circuit 170. The electric heater 172 heats the heat medium according to a control command from the ECU 500.

The battery 173 may be heated with the electric heater 172 or may be cooled with the chiller 160. The bypass path 174 is provided to allow the heat medium to bypass the electric heater 172 and the battery 173. When the heat medium flows through the bypass path 174, a change in temperature of the heat medium associated with heat absorption and heat dissipation between the heat medium and the battery 173 can be reduced. The temperature sensor 175 detects the temperature of the battery 173.

The five-way valve 180 includes ports P1 to P5. The port P1 is an inlet port into which the heat medium flows from the chiller 160. The port P2 is an outlet port from which the heat medium flows toward the electric heater 172 and the battery 173 of the battery circuit 170. The port P3 is an inlet port into which the heat medium flows from the SPU 132, the PCU 133-2, the oil cooler 134, and the buck-boost converter 135 of the low temperature circuit 130. The port P4 is an outlet port from which the heat medium flows toward the bypass path 174 of the battery circuit 170. The port P5 is an outlet port from which the heat medium flows toward the low temperature radiator 122.

The five-way valve 190 includes ports P11 to P15. The port P11 is an outlet port from which the heat medium flows toward the chiller 160. The port P12 is an inlet port into which the heat medium flows from the electric heater 172 and the battery 173 of the battery circuit 170. The port P13 is an outlet port from which the heat medium flows toward the SPU 132, the PCU 133-2, the oil cooler 134, and the buck-boost converter 135 of the low temperature circuit 130. The port P14 is an inlet port into which the heat medium flows from the bypass path 174 of the battery circuit 170. The port P15 is an inlet port into which the heat medium flows from the low temperature radiator 122.

The five-way valves 180, 190 are configured to switch the connection state between a flow path 130a, the flow path 130b, a flow path 170a, and a flow path 170b (all of which will be described below) according to a command from the ECU 500.

The battery 173 is provided in the flow path 170b of the battery circuit 170. The battery 173 exchanges heat with the heat medium in the flow path 170b. The flow path 170b is in thermal contact with the battery 173. The flow path 170b is a flow path connecting the port P2 of the five-way valve 180 and the port P12 of the five-way valve 190. The heat medium can flow through the flow path 170b. The flow path 170b is an example of the "first flow path" of the present disclosure.

The low temperature radiator 122 is provided in the flow path 130a of the low temperature circuit 130. The flow path 130a is a flow path connecting the port P5 of the five-way valve 180 and the port P15 of the five-way valve 190. The heat medium can flow through the flow path 130a. The flow path 130a is an example of the "third flow path" of the present disclosure.

The water pump 131, the SPU 132, the PCU 133-2 (transaxle 133), the oil cooler 134, the buck-boost converter 135, and the reservoir tank 136 are provided in the flow path 130b of the low temperature circuit 130. The PCU 133-2 (transaxle 133) etc. exchange heat with the heat medium in the flow path 130b. The flow path 130b is in thermal contact with the SPU 132, the PCU 133-2 (transaxle 133), the oil cooler 134, and the buck-boost converter 135. The flow path 130b is a flow path connecting the port P3 of the five-way valve 180 and the port P13 of the five-way valve 190. The heat medium can flow through the flow path 130b. The flow path 130b is an example of the "second flow path" of the present disclosure.

The chiller 160 is provided in the flow path 170a of the battery circuit 170. The flow path 170a is a flow path connecting the port P1 of the five-way valve 180 and the port P11 of the five-way valve 190. The heat medium can flow through the flow path 170a. The flow path 170a is an example of the "fourth flow path" of the present disclosure.

### Communication Patterns

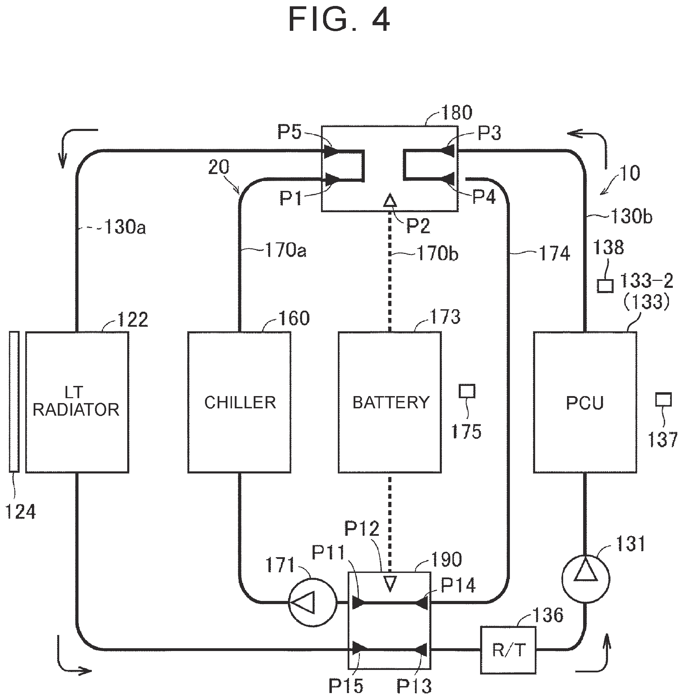

FIG. 4 is a conceptual diagram showing an overview of a predetermined communication pattern (hereinafter sometimes referred to as "reference communication pattern") of the thermal management circuit 100 that is formed by controlling the five-way valves 180, 190. The reference communication pattern is an example of the "switching circuit" of the present disclosure.

Since the electrified vehicle 1a is not equipped with an engine, it is not possible to use engine waste heat to heat components of the electrified vehicle 1a that are to be heated. Therefore, it is sometimes important to effectively use the heat generated by the transaxle 133. Moreover, when the heat generated by the battery 173 is transferred to components such as the radiator 120 via the heat medium during the heating control of the battery 173 performed by the ECU 500, the heat may be taken from the battery 173 and the heating control may not be effectively performed. It is therefore desired to efficiently perform the heating control of the battery 173.

In the first embodiment, when performing the heating control of the battery 173, the ECU 500 controls the five-way valves 180, 190 to cause the reference communication pattern formed (FIG. 4). In the reference communication pattern, the five-way valve 180 forms a path connecting the ports P1, P5 and a path connecting the ports P3, P4.

In the reference communication pattern, the five-way valve 190 forms a path connecting the ports P11, P14 and a path connecting the ports P13, P15.

As a result, the flow path 170b is disconnected from and independent of the bypass path 174 and the flow paths 130a, 130b, and 170a. The flow path 130b is connected to the bypass path 174, the flow path 130a, and the flow path 170a. The flow path 130a is connected to the flow path 170a.

In the reference communication pattern, the flow path 170b is independent. This can reduce or eliminate the possibility that the heat generated by the battery 173 due to the heating control of the battery 173 may be taken by the heat medium in the bypass path 174, the flow path 130a, the flow path 130b, and the flow path 170a and dissipated from the low temperature radiator 122. As a result, the heating control can be effectively performed. Furthermore, the heat generated by the transaxle 133 (PCU 133-2) can be stored in the heat medium in the flow path 130a, the flow path 130b, and the flow path 170a. Therefore, it is possible to allow effective use of heat generated by the transaxle 133 while reducing or eliminating the possibility of heat being taken from the battery 173.

The ECU 500 preferably controls the grille shutter 124 to the closed state when the reference communication pattern is formed.

When the grille shutter 124 is in the closed state, the amount of heat that is dissipated from the low temperature radiator 122 to the outside of the electrified vehicle 1a is smaller than when the grille shutter 124 is in the open state. By controlling the grille shutter 124 to the closed state as described above, the amount of heat that is dissipated from the low temperature radiator 122 to the outside of the electrified vehicle 1a can be reduced. The heat generated by the transaxle 133 (PCU 133-2) can thus be effectively stored in the heat medium in the flow path 130a, the flow path 130b, and the flow path 170a.

The ECU 500 may switch the grille shutter 124 from the closed state to the open state when the value of the temperature related to the temperature of the transaxle 133 (e.g., the detected value from the temperature sensor 137 or the detected value from the temperature sensor 138) becomes higher than a predetermined threshold. The threshold is experimentally determined in advance as a value that is higher than a reference value that will be described later and as such a value that the transaxle 133 is protected from overheating when the above value of the temperature is less than the threshold.

As described above, when the grille shutter 124 is switched to the open state, dissipation of heat from the transaxle 133 to the outside of the electrified vehicle 1a via the low temperature radiator 122 is facilitated. Overheating of the transaxle 133 can thus be effectively avoided.

### Method for Controlling Thermal Management Circuit

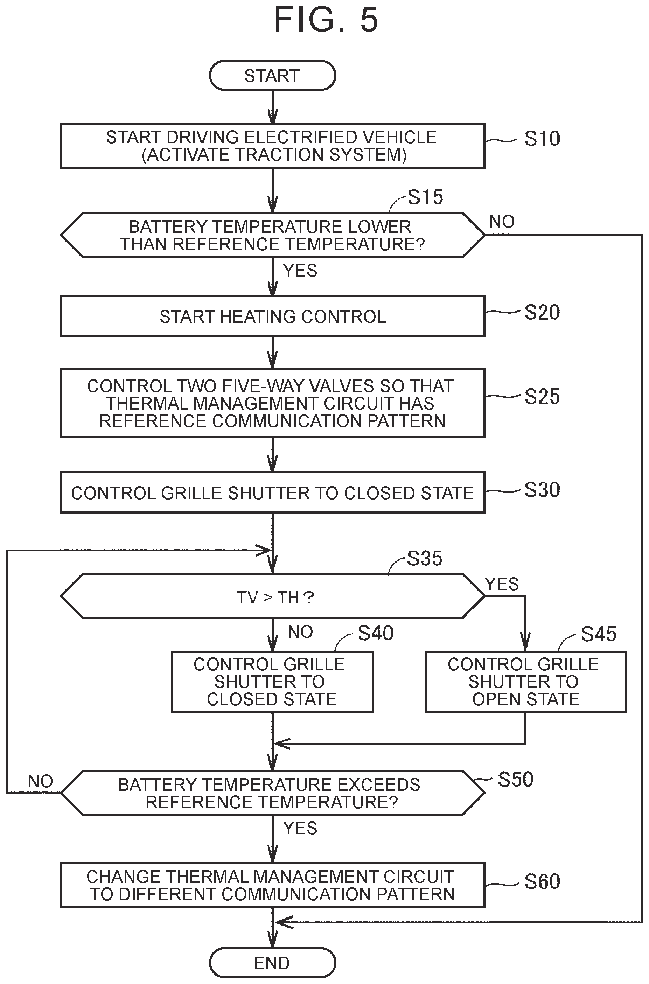

FIG. 5 is a flowchart illustrating a process that is performed by the ECU 500 according to the first embodiment. Hereinafter, the term "step" is abbreviated as "S."

Referring to FIG. 5, the ECU 500 starts driving the electrified vehicle 1a (activates the traction system) (S10). Specifically, the ECU 500 turns on the SMR 700 in response to an operation (pressing) of the start switch 650.

The ECU 500 determines whether the temperature of the battery 173 detected by the temperature sensor 175 is lower than a predetermined reference temperature (e.g., 10°C) (S15). When the temperature of the battery 173 is equal to or higher than the reference temperature (No in S15), the process ends. When the temperature of the battery 173 is lower than the reference temperature (Yes in S15), the process proceeds to step S20.

The ECU 500 starts the heating control by performing charge control or discharge control of the battery 173 (S20). The ECU 500 controls the five-way valves 180, 190 so that the thermal management circuit 100 has the reference communication pattern (FIG. 4) (S25), and controls the grille shutter 124 to the closed state (S30). The ECU 500 may perform S20, S25, and S30 simultaneously.

The ECU 500 determines whether the value TV of the temperature related to the temperature of the transaxle 133 is higher than a threshold TH (S35). When the value TV is equal to or less than the threshold TH (No in S35), the ECU 500 controls the grille shutter 124 to the closed state (S40). When the grille shutter 124 is in the closed state immediately before S40, the grille shutter 124 is kept in the closed state. When the value TV is higher than the threshold TH (Yes in S35), the ECU 500 controls the grille shutter 124 to the open state (S45). When the grille shutter 124 is in the closed state immediately before S45, the grille shutter 124 is switched from the closed state to the open state.

The ECU 500 determines whether the temperature of the battery 173 detected by the temperature sensor 175 exceeds the reference temperature (S50). When the temperature of the battery 173 is equal to or lower than the reference temperature (No in S50), the process returns to S35. When the temperature of the battery 173 exceeds the reference temperature (Yes in S50), the heating control of the battery 173 by the ECU 500 ends, and the process proceeds to S60.

The ECU 500 controls the five-way valves 180, 190 to change the communication pattern of the thermal management circuit 100 from the reference communication pattern (FIG. 4) to a different communication pattern (e.g., a communication pattern suitable for traveling of the electrified vehicle 1a) (S60). The process then ends.

As described above, in the first embodiment, it is possible to allow effective use of heat generated by the transaxle 133 while reducing or eliminating the possibility of heat being taken from the battery 173 during the heating control.

### First Modification of First Embodiment

Referring back to FIGS. 3 and 4, the process that is performed by the ECU 500 when heating of the vehicle cabin is requested (e.g., when the heating request operation described above is performed) will be described. In this case, the ECU 500 supplies heat from the transaxle 133 to the high temperature circuit 110 via the chiller 160 by driving the high temperature circuit 110 (specifically, the water pump 111 and optionally the electric heater 112) with the reference communication pattern formed.

With this configuration, the heat from the transaxle 133 (heat stored in the heat medium in the flow path 130b) is supplied to the heater core 114 via the chiller 160, the refrigeration cycle 150, and the condenser 140 in response to a heating request. Not only the heat from the electric heater 112 but also the heat from the transaxle 133 can thus be used to heat the vehicle cabin. As a result, the amount of heat that needs to be generated by the electric heater 112 to heat the vehicle cabin can be reduced (burden on the electric heater 112 can be reduced).

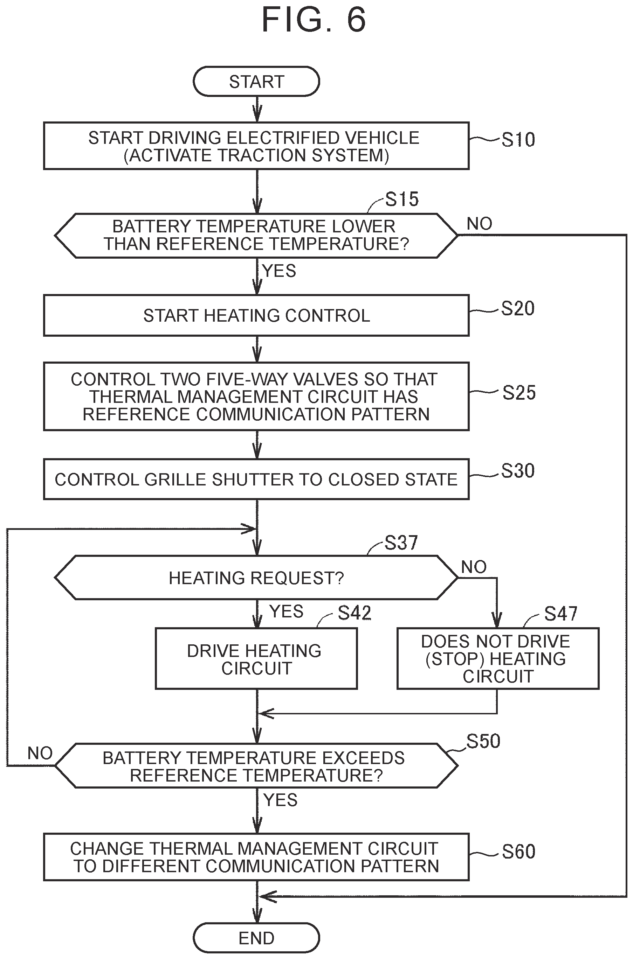

FIG. 6 is a flowchart illustrating a process that is performed by the ECU 500 according a first modification of the first embodiment. This flowchart is different from the flowchart of the first embodiment (FIG. 5) in that S37, S42, and S47 are performed instead of S35, S40, and S45, respectively.

Referring to FIG. 6, in S37 after S30, the ECU 500 determines whether a heating request operation has been performed (whether there is a heating request). When there is a heating request (Yes in S37), the ECU 500 drives a heating circuit (S42). When there is no heating request (No in S37), the ECU 500 does not drive the heating circuit (S47). For example, S47 is a step of stopping the heating circuit when a request is made to stop the heating while the heating circuit is being driven. After S42 or S47, the process proceeds to S50.

According to the first modification of the first embodiment, the heat from the transaxle 133 can be stored in the heat medium in the flow path 130b, and the stored heat can be used to heat the vehicle cabin.

### Second Modification of First Embodiment

Referring back to FIGS. 3 and 4, when the detected value from the temperature sensor 138 exceeds the detected value from the temperature sensor 175 during the heating control of the battery 173 with the reference communication pattern formed, the ECU 500 may control (switch) the five-way valves 180, 190 so that the flow path 170b is connected to the flow path 130b.

After the detected value from the temperature sensor 138 exceeds the detected value from the temperature sensor 175, the temperature of the heat medium in the flow path 130b is higher than the temperature of the battery 173. When the five-way valves 180, 190 are controlled as described above, the heat stored in the heat medium in the flow path 130b is transferred to the battery 173. The battery 173 is thus heated by the heat stored in the heat medium in the flow path 170b (heat derived from the transaxle 133) in addition to the heat generated due to the internal resistance of the battery 173 during the heating control of the battery 173. As a result, heating of the battery 173 can further be facilitated.

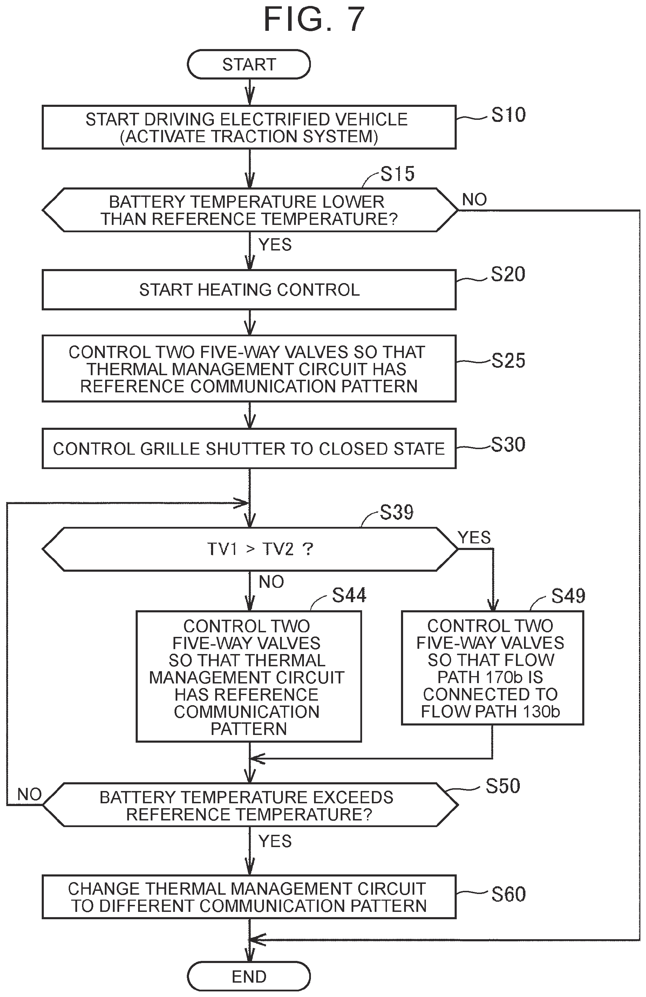

FIG. 7 is a flowchart illustrating a process that is performed by the ECU 500 according a second modification of the first embodiment. This flowchart is different from the flowchart of the first embodiment (FIG. 5) in that S39, S44, and S49 are performed instead of S35, S40, and S45, respectively.

Referring to FIG. 7, after S30, the ECU 500 determines whether the detected value TV1 from the temperature sensor 138 is higher than the detected value TV2 from the temperature sensor 175 (S39). When the detected value TV1 is equal to or less than the detected value TV2 (No in S39), the ECU 500 controls the five-way valves 180, 190 so that the thermal management circuit 100 has the reference communication pattern (S44). When the detected value TV1 is higher than the detected value TV2 (Yes in S39), the ECU 500 controls the five-way valves 180, 190 so that the flow path 170b is connected to the flow path 130b (S49). For example, when the detected value TV1 exceeds the detected value TV2, the ECU 500 switches the five-way valves 180, 190 so that the communication pattern of the thermal management circuit 100 changes from the reference communication pattern to a communication pattern (not shown) in which the flow path 170b and the flow path 130b are connected. After S44 or S49, the process proceeds to S50.

According to the second modification of the first embodiment, heating of the battery 173 can be facilitated during the heating control of the battery 173.

### Third Modification of First Embodiment

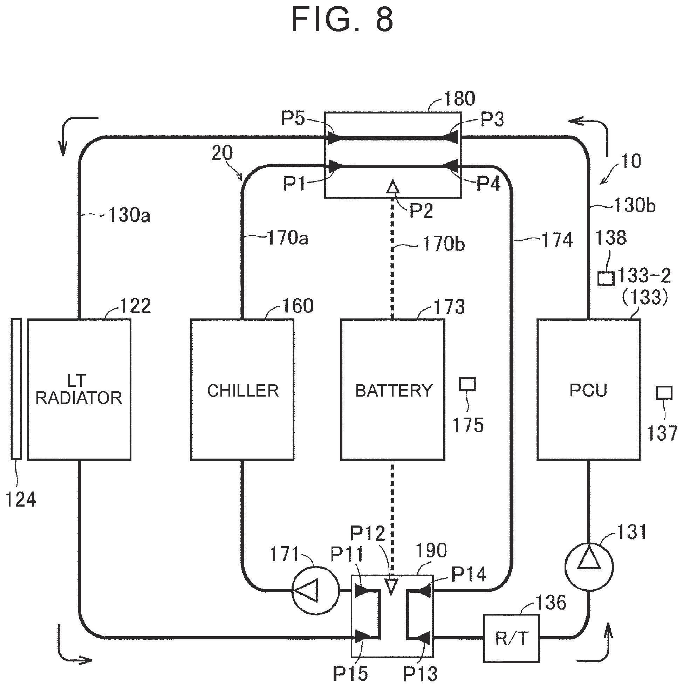

FIG. 8 illustrates another example of the reference communication pattern of the thermal management circuit 100. Referring to FIG. 8, the reference communication pattern is not limited to the pattern shown in FIG. 4 and may be a different pattern as shown in FIG. 8 as long as the flow path 170b is disconnected from and independent of the bypass path 174 and the flow paths 130a, 130b, and 170a, the flow path 130b is connected to the flow paths 130a, 170a, and the flow path 130a is connected to the flow path 170a.

### Second Embodiment

The configuration using the five-way valves 180, 190 is described in the first embodiment. However, the configuration of the switching device according to the present disclosure is not limited to this. The configuration in which the switching device according to the present disclosure is a ten-way valve 280 will be described in a second embodiment.

### Overall Configuration

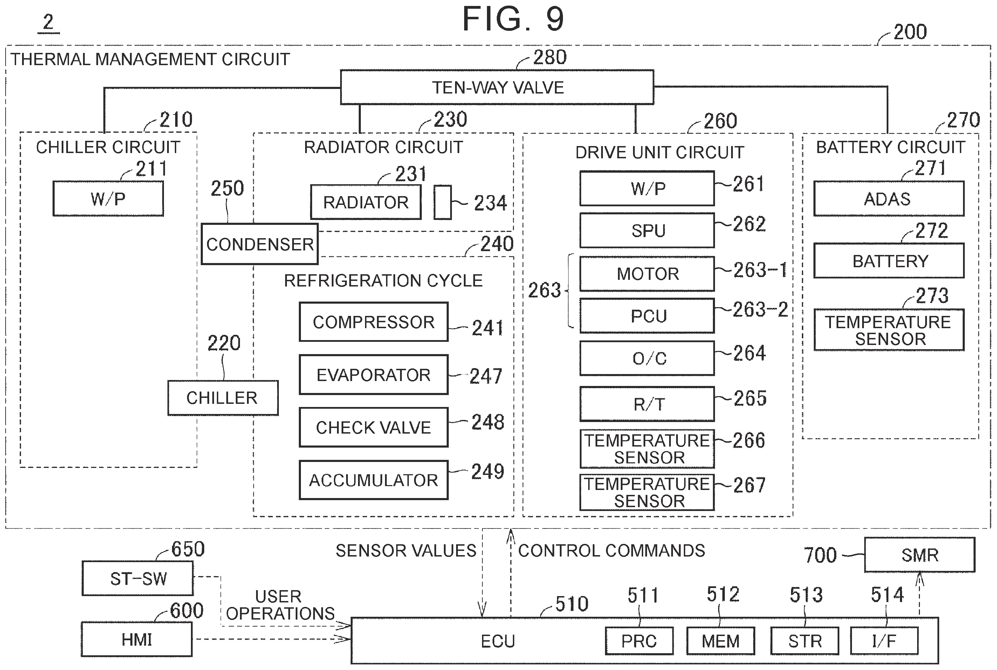

FIG. 9 shows an example of the overall configuration of a thermal management system 2 according to the second embodiment of the present disclosure. The thermal management system 2 is different from the thermal management system 1 according to the first embodiment (see FIG. 1) in that the thermal management system 2 includes a thermal management circuit 200 instead of the thermal management circuit 100 and includes an ECU 510 instead of the ECU 500.

The thermal management circuit 200 includes a chiller circuit 210, a chiller 220, a radiator circuit 230, a refrigeration cycle 240, a condenser 250, a drive unit circuit 260, a battery circuit 270, and a ten-way valve 280. The ten-way valve 280 is an example of the "switching device" of the present disclosure.

The chiller circuit 210 includes a water pump (W/P) 211. The chiller 220 is connected to (shared by) both the chiller circuit 210 and the refrigeration cycle 240. The chiller 220 is an example of the "chiller device" of the present disclosure.

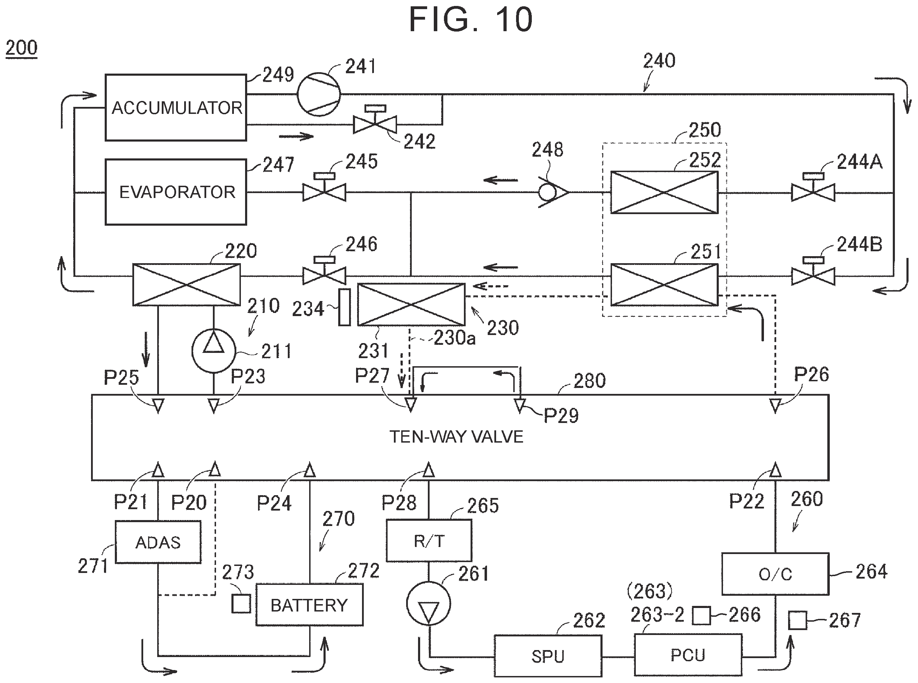

The radiator circuit 230 includes a radiator 231 and a grille shutter 234. The refrigeration cycle 240 includes a compressor 241, an electromagnetic valve 242 (see FIG. 10), electromagnetic valves 244A, 244B, 245, and 246 (see FIG. 10), an evaporator 247, a check valve 248, and an accumulator 249. The condenser 250 includes a water-cooled condenser 251 and an air-cooled condenser 252 (see FIG. 10), and the water-cooled condenser 251 is connected to both the refrigeration cycle 240 and the radiator circuit 230. The chiller 220, the compressor 241, the accumulator 249, and the condenser 250 form an example of the "heating circuit" of the present disclosure.

The drive unit circuit 260 includes a water pump 261, an SPU 262, a transaxle 263 (motor 263-1 and PCU 263-2), an oil cooler 264, a reservoir tank 265, and temperature sensors 266, 267. The transaxle 263 is an example of the "drive device" of the present disclosure. The transaxle 263, a battery 272, and the SMR 700 form an example of the "traction system" of the present disclosure.

The battery circuit 270 includes advanced driver-assistance systems (ADAS) 271, the battery 272, and a temperature sensor 273. The battery 272 is an example of the "energy storage device" of the present disclosure. The temperature sensor 273 is an example of the "first temperature sensor" of the present disclosure.

The ten-way valve 280 includes ports P20 to P29 (see FIGS. 10 to 11B), and is connected to the chiller circuit 210, the radiator circuit 230, the drive unit circuit 260, and the battery circuit 270.

The ECU 510 controls the thermal management circuit 200. The ECU 510 includes a processor 511, a memory 512, a storage 513, and an interface 514.

### Configuration of Thermal Management Circuit

FIG. 10 shows an example of the configuration of the thermal management circuit 200 according to the second embodiment. A heat medium circulating in the chiller circuit 210 flows through the following path: "ten-way valve 280 (port P23) - water pump 211 - chiller 220 - ten-way valve 280 (port P25)."

The water pump 211 circulates the heat medium in the chiller circuit 210 according to a control command from the ECU 510. The chiller 220 exchanges heat between the heat medium circulating in the chiller circuit 210 and the heat medium circulating in the refrigeration cycle 240. The ten-way valve 280 switches the path to which the chiller circuit 210 is connected according to a control command from the ECU 510. The switching of the path by the ten-way valve 280 will be discussed in detail later.

In the example shown in FIG. 10, the heat medium that can flow through the radiator circuit 230 can flow through the following path: ten-way valve 280 (port P29) - ten-way valve 280 (port P27). The heat medium can also flow through the following path: ten-way valve 280 (port P26) - water-cooled condenser 251 - radiator 231 - ten-way valve 280 (port P27). The radiator 231 exchanges heat between the heat medium and the air outside the electrified vehicle 1a. The grille shutter 234 is mounted for the radiator 231.

The heat medium (gas-phase refrigerant or liquid-phase refrigerant) circulating in the refrigeration cycle 240 flows through one of first to fourth paths. The first path is a path of "compressor 241 - electromagnetic valve 244A - air-cooled condenser 252 - check valve 248 - electromagnetic valve (expansion valve) 245 - evaporator 247 - accumulator 249 - compressor 241." The second path is a path of "compressor 241 - electromagnetic valve 244A - air-cooled condenser 252 - check valve 248 - electromagnetic valve (expansion valve) 246 - chiller 220 - accumulator 249 - compressor 241." The third path is a path of "compressor 241 - electromagnetic valve 244B - water-cooled condenser 251 - electromagnetic valve (expansion valve) 245 - evaporator 247 - accumulator 249 - compressor 241." The fourth path is a path of "compressor 241 - electromagnetic valve 244B - water-cooled condenser 251 - electromagnetic valve 246 - chiller 220 - accumulator 249 - compressor 241."

The compressor 241 compresses the gas-phase refrigerant circulating in the refrigeration cycle 240 according to a control command from the ECU 510. The electromagnetic valve 242 is connected in parallel with the compressor 241, and adjusts the amount of gas-phase refrigerant flowing into the compressor 241 according to a control command from the ECU 510. The electromagnetic valves 244 (244A, 244B) selectively allow the gas-phase refrigerant discharged from the compressor 241 to flow into either the water-cooled condenser 251 or the air-cooled condenser 252 according to a control command from the ECU 510. The water-cooled condenser 251 exchanges heat between the gas-phase refrigerant discharged from the compressor 241 and the heat medium flowing in the radiator circuit 230. The air-cooled condenser 252 exchanges heat with air introduced into the vehicle cabin to produce warm air.

The electromagnetic valve 245 restricts the flow of the liquid-phase refrigerant into the evaporator 247 according to a control command from the ECU 510. The electromagnetic valve 246 restricts the flow of the liquid-phase refrigerant into the chiller 220 according to a control command from the ECU 510. The electromagnetic valves 245, 246 also have a function to expand the liquid-phase refrigerant. The accumulator 249 removes the liquid-phase refrigerant from the refrigerant in a gas-liquid mixed state. The accumulator 249 thus reduces or eliminates the possibility that the liquid-phase refrigerant may be sucked into the compressor 241 when the refrigerant is not completely evaporated by the evaporator 247.

The heat medium (coolant) circulating in the drive unit circuit 260 flows through the following path: "ten-way valve 280 (port P28) - reservoir tank 265 - water pump 261 - SPU 262 - PCU 263-2 (transaxle 263) - oil cooler 264 - ten-way valve 280 (port P22)."

The water pump 261 circulates the heat medium in the drive unit circuit 260 according to a control command from the ECU 510. The SPU 262 controls charge and discharge of the battery 272 according to a control command from the ECU 510. The PCU 263-2 converts DC power supplied from the battery 272 to AC power to supply the AC power to the motor 263-1 of the transaxle 263 according to a control command from the ECU 510. The oil cooler 264 cools the transaxle 263 through heat exchange between the heat medium circulating in the drive unit circuit 260 and lubricating oil for the motor 263-1. Heat exchange may be performed between heat generated by supplying power to a stator without rotating a rotor of the motor 263-1 and the heat medium circulating in the drive unit circuit 260. The SPU 262, the PCU 263-2, and the oil cooler 264 are cooled by the heat medium circulating in the drive unit circuit 260.

The reservoir tank 265 stores part of the heat medium circulating in the drive unit circuit 260 (heat medium that has overflowed due to a pressure increase) to maintain the pressure and amount of heat medium in the drive unit circuit 260. The temperature sensor 266 may be an example of the "temperature sensor" of the present disclosure, and detects the temperature of the transaxle 263. The temperature sensor 267 is an example of the "temperature sensor" or "second temperature sensor" of the present disclosure, and detects the temperature of the heat medium in a flow path 260a (described later). The temperature detected by the temperature sensor 266 or the temperature detected by the temperature sensor 267 is the temperature related to the temperature of the transaxle 263.

The heat medium (coolant) circulating in the battery circuit 270 flows through the following path: "ten-way valve 280 (port P21) - ADAS 271 - battery 272 - ten-way valve 280 (port P24)." The heat medium can also flow through the following path: ten-way valve 280 (port P21) - ADAS 271 - ten-way valve 280 (port P20).

The ADAS 271 includes auto speed limiter (ASL) and lane keeping assist (LKA). The battery 272 supplies traction power to the motor 263-1. The temperature sensor 273 detects the temperature of the battery 272.

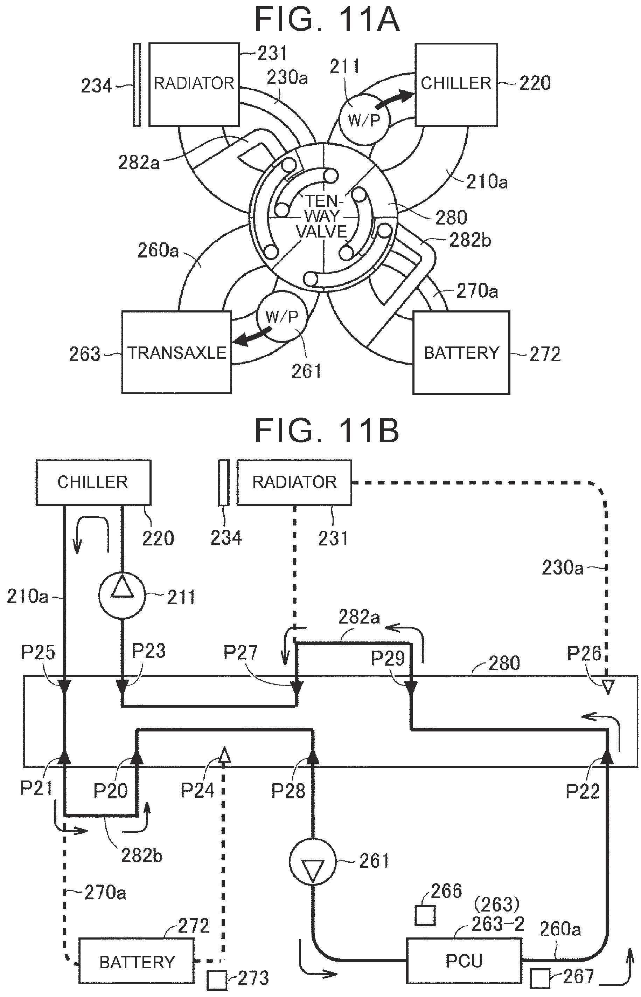

The chiller 220 is provided in a flow path 210a (see FIGS. 11A and 11B) of the chiller circuit 210. The flow path 210a is a flow path connecting the ports P23, P25 of the ten-way valve 280. The flow path 210a is an example of the "fourth flow path" of the present disclosure.

The radiator 231 is provided in a flow path 230a (see FIGS. 11A and 11B) of the radiator circuit 230. The flow path 230a connects the radiator 231 and the ten-way valve 280. The flow path 230a is in parallel with a bypass flow path 282a. When the heat medium flows through the bypass flow path 282a, the heat medium does not flow through the radiator 231 (flow path 230a). When the heat medium flows through the radiator 231 (flow path 230a), the heat medium does not flow through the bypass flow path 282a. The flow path 230a is an example of the "third flow path" of the present disclosure.

The water pump 261, the SPU 262, the PCU 263-2, the oil cooler 264, and the reservoir tank 265 (only the water pump 261 and the PCU 263-2 are representatively shown in FIGS. 11A and 11B) are provided in a flow path 260a (see FIGS. 11A and 11B) of the drive unit circuit 260. The PCU 263-2 (transaxle 263) etc. exchange heat with the heat medium in the flow path 260a. The flow path 260a is in thermal contact with the PCU 263-2 etc. The flow path 260a is a flow path connecting the ports P22, P28 of the ten-way valve 280. The flow path 260a is an example of the "second flow path" of the present disclosure.

The battery 272 is provided in a flow path 270a (see FIGS. 11A and 11B) of the battery circuit 270. The flow path 270a is a flow path connecting the ports P24, P21 of the ten-way valve 280, and is in parallel with a bypass flow path 282b. The battery 272 exchanges heat with the heat medium in the flow path 270a. The flow path 270a is in thermal contact with the battery 272. The flow path 270a is an example of the "first flow path" of the present disclosure. The bypass flow path 282b is a flow path connecting the ports P21, P20 of the ten-way valve 280.

### Communication Patterns

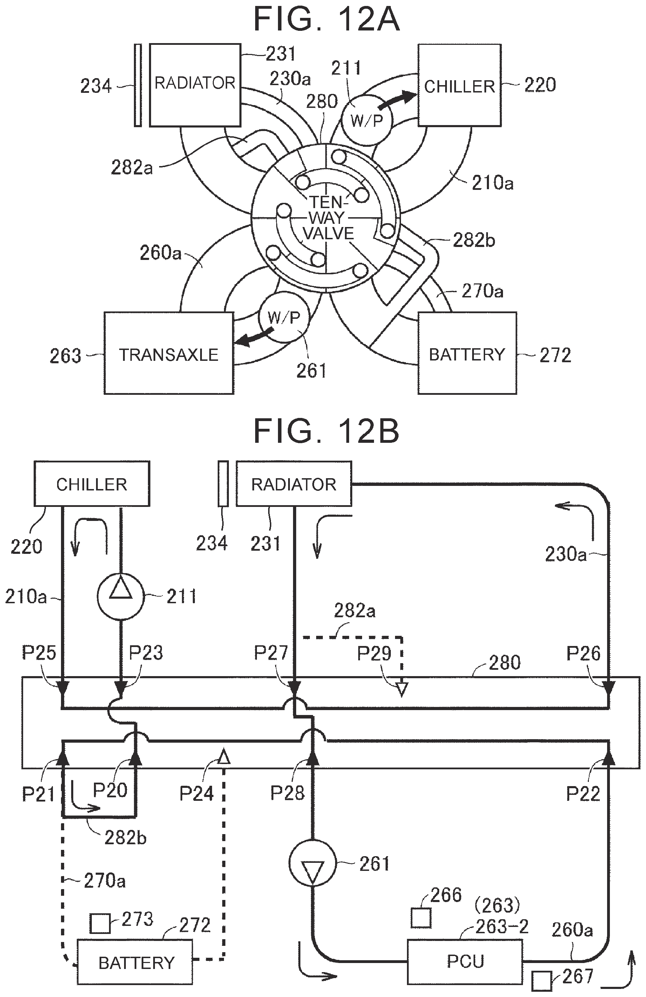

FIGS. 11A, 11B and FIGS. 12A, 12B are conceptual diagrams showing an overview of an initial communication pattern and a reference communication pattern that are formed by the ten-way valve 280, respectively. When the traction system is activated, the ECU 510 starts the heating control and controls the ten-way valve 280 to cause the initial communication pattern formed (FIGS. 11A and 11B).

Referring to FIGS. 11A and 11B, the following paths are formed in the initial communication pattern: a path connecting the ports P21, P20, a path connecting the ports P23, P25, a path connecting the ports P27, P29, and a path connecting the ports P22, P28.

The flow path 210a is a flow path connecting the port P23 to the port P25. The flow path 230a is a flow path connecting the port P26 to the port P27. The flow path 260a is a flow path connecting the port P22 to the port P28. The flow path 270a is a flow path connecting the port P21 to the port P24. The heat medium can flow through each of the flow paths 210a, 230a, 260a, and 270a.

In the initial communication pattern, the flow paths 230a, 270a are independent, and the flow paths 210a, 260a are connected. In other words, the battery 272 is disconnected from and independent of the radiator 231, the chiller 220, and the PCU 263-2 (transaxle 263), the radiator 231 is disconnected from and independent of the chiller 220 and the PCU 263-2, and the chiller 220 is connected to the PCU 263-2.

This configuration can reduce or eliminate the possibility that heat from the battery 272 may be transferred to the radiator 231 via the heat medium and dissipated from the radiator 231 to the outside of the electrified vehicle 1a during the heating control. This configuration can also reduce or eliminate the possibility that heat from the transaxle 263 may be transferred to the radiator 231 via the heat medium and dissipated from the radiator 231. As a result, the heat from the transaxle 263 can be effectively stored in the heat medium in the flow path 260a.

When the value of the temperature related to the temperature of the transaxle 263 (in this example, the detected value from the temperature sensor 266 or the temperature sensor 267) exceeds a predetermined reference value after formation of the initial communication pattern, the ECU 510 controls the ten-way valve 280 to cause the reference communication pattern formed (FIGS. 12A and 12B). That is, the ECU 510 switches the communication pattern of the thermal management circuit 200 from the initial communication pattern to the reference communication pattern. The reference value is experimentally determined in advance as appropriate in order to protect the transaxle 263 from overheating. The reference value is lower than the threshold described above.

When the reference communication pattern is thus formed, the heat from the transaxle 263 is transferred to the radiator 231 via the heat medium and is dissipated to the outside of the electrified vehicle 1a. Overheating of the transaxle 263 can thus be avoided.

### Method for Controlling Thermal Management Circuit

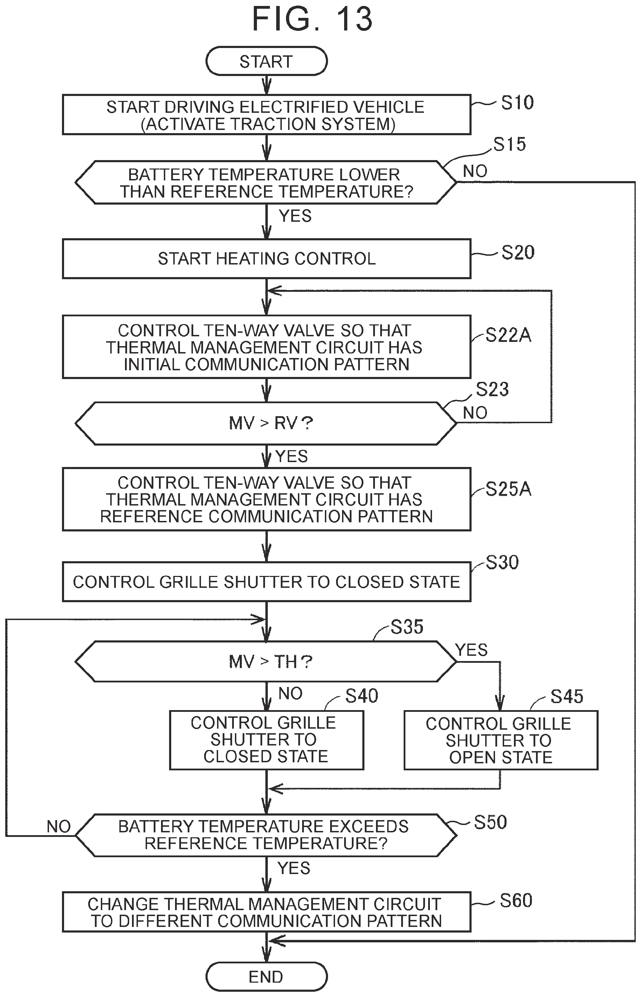

FIG. 13 is a flowchart illustrating a control method of the thermal management system 2. Referring to FIG. 13, this flowchart is different from the flowchart of the first embodiment (FIG. 6) in that S22A and S23 are added and S25A is performed instead of S25. This flowchart is otherwise basically the same as the flowchart of the first embodiment.

After S20, the ECU 510 controls the ten-way valve 280 so that the thermal management circuit 200 has the initial communication pattern (FIGS. 11A and 11B) (S22A).

The ECU 510 determines whether the value MV of the temperature related to the temperature of the transaxle 263 is higher than a reference value RV (S23). When the value MV is equal to or lower than the reference value RV (No in S23), the process returns to S22A. When the value MV is higher than the reference value RV (Yes in S23), the ECU 510 controls the ten-way valve 280 so that the thermal management circuit 200 has the reference communication pattern (FIGS. 12A and 12B) (S25A). The process then proceeds to S30.

Other configurations and effects of the second embodiment are the same as those of the first embodiment.

### Modification of Second Embodiment

The ECU 510 may cause the reference communication pattern formed instead of the initial communication pattern when the traction system is activated (at the start of the heating control).

When heating of the vehicle cabin is requested, the ECU 510 may supply heat from the transaxle 263 to the heating circuit via the chiller 220 by driving the heating circuit with the reference communication pattern formed.

When the detected value from the temperature sensor 267 exceeds the detected value from the temperature sensor 273 during the heating control of the battery 272 with the reference communication pattern formed, the ECU 510 may control the ten-way valve 280 so that the flow path 270a is connected to the flow path 260a.

### Third Embodiment

Unlike the second embodiment using the ten-way valve 280, a third embodiment uses two six-way valves. The same components as those of the second embodiment are denoted by the same signs as those of the second embodiment, and description thereof will not be repeated.

### Overall Configuration

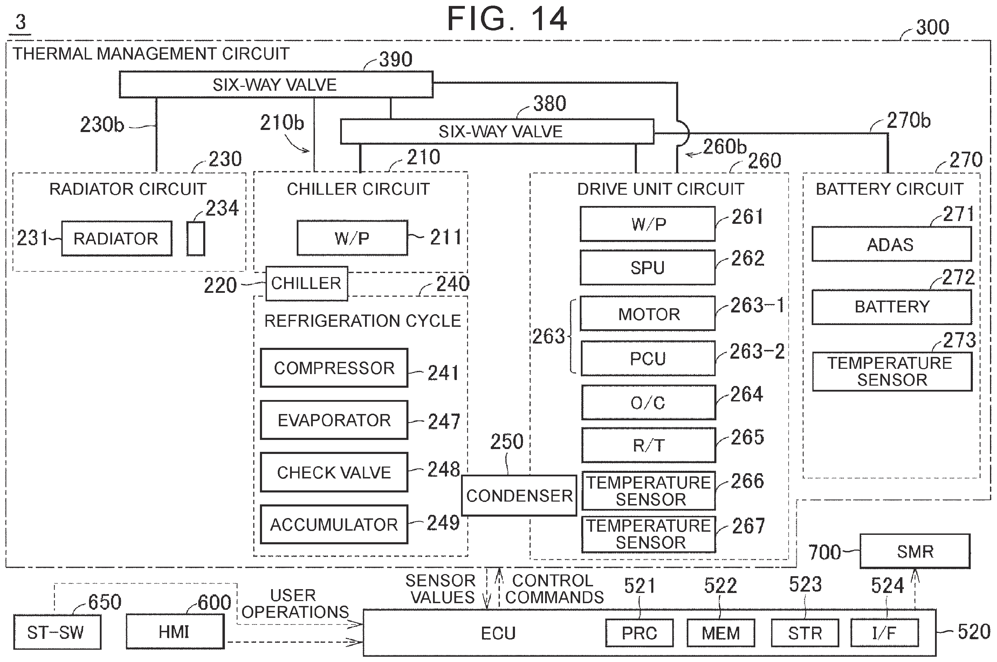

FIG. 14 shows an example of the overall configuration of a thermal management system 3 according to the third embodiment. The thermal management system 3 is different from the thermal management system 2 according to the second embodiment (see FIG. 9) in that the thermal management system 3 includes a thermal management circuit 300 instead of the thermal management circuit 200 and includes an ECU 520 instead of the ECU 510.

The thermal management circuit 300 includes the chiller circuit 210, the chiller 220, the radiator circuit 230, the refrigeration cycle 240, the condenser 250, the drive unit circuit 260, the battery circuit 270, a six-way valve 380, and a six-way valve 390. The six-way valves 380, 390 are an example of the "switching device" of the present disclosure.

The chiller 220 is provided in a flow path 210b of the chiller circuit 210. The flow path 210b connects the chiller circuit 210 and each of the six-way valves 380, 390. The flow path 210b is an example of the "fourth flow path" of the present disclosure.

The radiator 231 is provided in a flow path 230b. The flow path 230b connects the radiator 231 and the six-way valve 390. The flow path 230b is an example of the "third flow path" of the present disclosure.

The water pump 261, the SPU 262, the transaxle 263, the oil cooler 264, and the reservoir tank 265 are provided in a flow path 260b of the drive unit circuit 260. The flow path 260b connects the drive unit circuit 260 and each of the six-way valves 380, 390. The flow path 260b is in thermal contact with the SPU 262, the transaxle 263, the oil cooler 264, etc. The transaxle 263 etc. thus exchange heat with the heat medium in the flow path 260b. The flow path 260b is an example of the "second flow path" of the present disclosure.

The battery 272 is provided in a flow path 270b of the battery circuit 270. The flow path 270b connects the battery circuit 270 and the six-way valve 380. The flow path 270b is in thermal contact with the battery 272. The battery 272 thus exchanges heat with the heat medium in the flow path 270b. The flow path 270b is an example of the "first flow path" of the present disclosure.

The ECU 520 controls the thermal management circuit 300. The ECU 520 includes a processor 521, a memory 522, a storage 523, and an interface 524.

### Configuration of Thermal Management Circuit

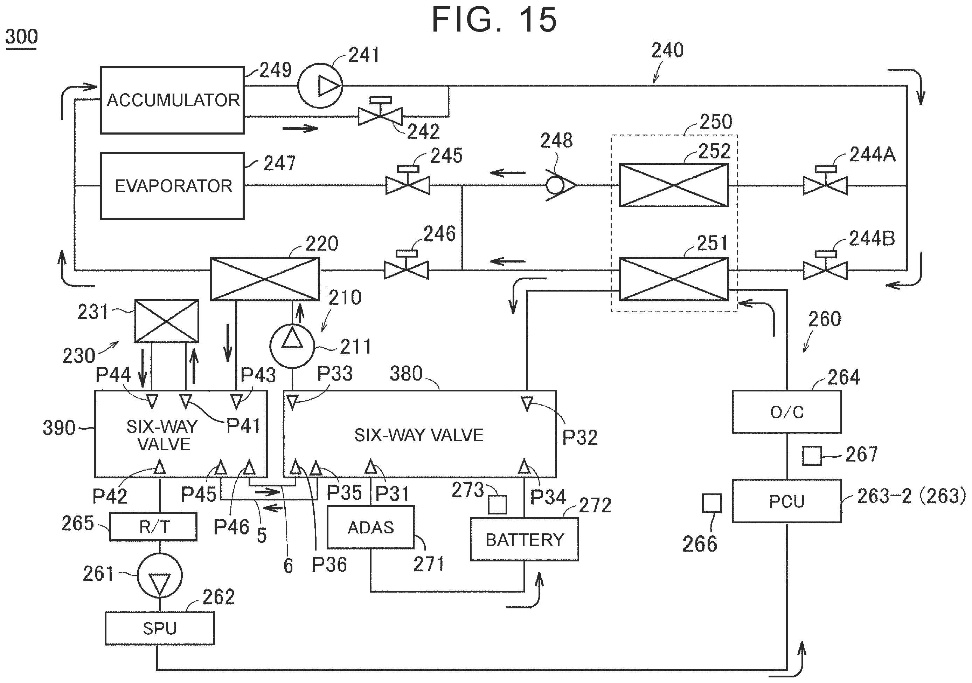

FIG. 15 shows an example of the configuration of the thermal management circuit 300 according to the third embodiment. As shown in FIG. 15, the six-way valve 380 includes ports P31 to P36. The six-way valve 390 includes ports P41 to P46.

The six-way valve 380 is connected to the six-way valve 390. Specifically, the port P35 of the six-way valve 380 and the port P45 of the six-way valve 390 are connected by a flow path 5. The port P36 of the six-way valve 380 and the port P46 of the six-way valve 390 are connected by a flow path 6.

A heat medium circulating in the chiller circuit 210 flows through the following path: "six-way valve 380 (port P33) - water pump 211 - chiller 220 - six-way valve 390 (port P43)."

The heat medium circulating in the radiator circuit 230 flows through the following path: "six-way valve 390 (port P41) - radiator 231 - six-way valve 390 (port P44)."

The heat medium (coolant) circulating in the drive unit circuit 260 flows through the following path: "six-way valve 390 (port P42) - reservoir tank 265 - water pump 261 - SPU 262 - PCU 263-2 - oil cooler 264 - water-cooled condenser 251 - six-way valve 380 (port P32)."

The heat medium (coolant) circulating in the battery circuit 270 flows through the following path: "six-way valve 380 (port P31) - ADAS 271 - battery 272 - six-way valve 380 (port P34)."

### Communication Patterns

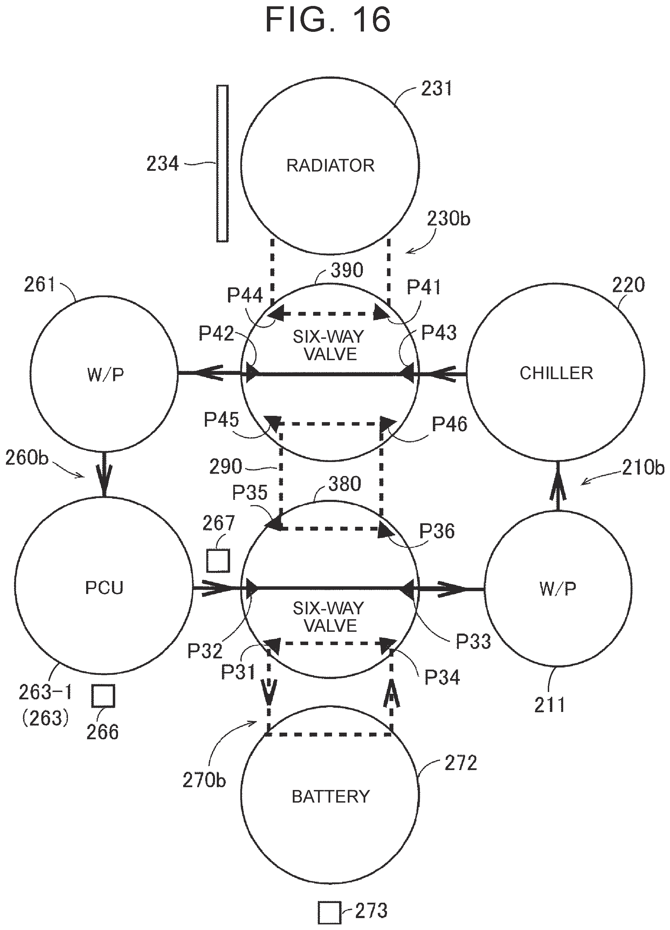

FIG. 16 is a conceptual diagram showing an overview of an initial communication pattern of the thermal management circuit 300 that is formed by controlling the six-way valves 380, 390.

In the initial communication pattern shown in FIG. 16, the six-way valve 380 forms a path connecting the ports P32, P33, a path connecting the ports P35, P36 (flow path 290), and a path connecting the ports P31, P34 (flow path 270b).

In addition, the six-way valve 390 forms a path connecting the ports P42, P43, a path connecting the ports P45, P46 (flow path 290), and a path connecting the ports P41, P44 (flow path 230b).

According to the initial communication pattern of the third embodiment, heat from the transaxle 263 can be effectively stored in the heat medium in the flow paths 210b, 260b, as in the second embodiment.

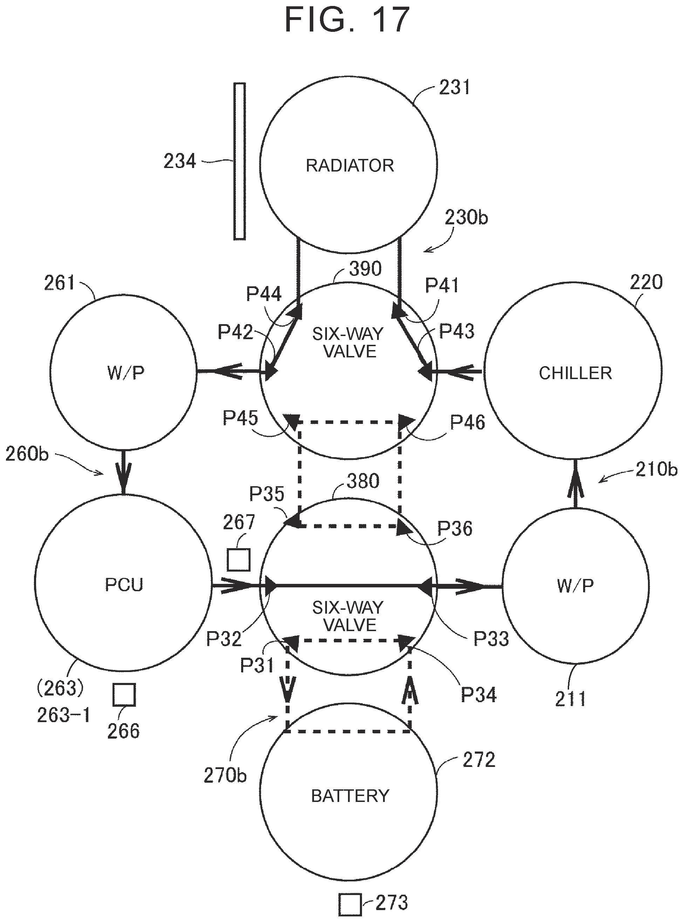

FIG. 17 is a conceptual diagram showing an overview of a reference communication pattern of the thermal management circuit 300 that is formed by controlling the six-way valves 380, 390. Referring to FIG. 17, when the value MV exceeds the reference value RV after formation of the initial communication pattern, the ECU 520 controls the six-way valves 380, 390 to cause the reference communication pattern formed (switch the communication pattern from the initial communication pattern to the reference communication pattern). In this reference communication pattern as well, the flow path 270b is disconnected from and independent of the flow paths 210b, 230b, and 260b, the flow path 260b is connected to the flow paths 210b, 230b, and the flow path 230b is connected to the flow path 210b. Overheating of the transaxle 263 can thus be avoided as in the second embodiment.

### Method for Controlling Thermal Management Circuit

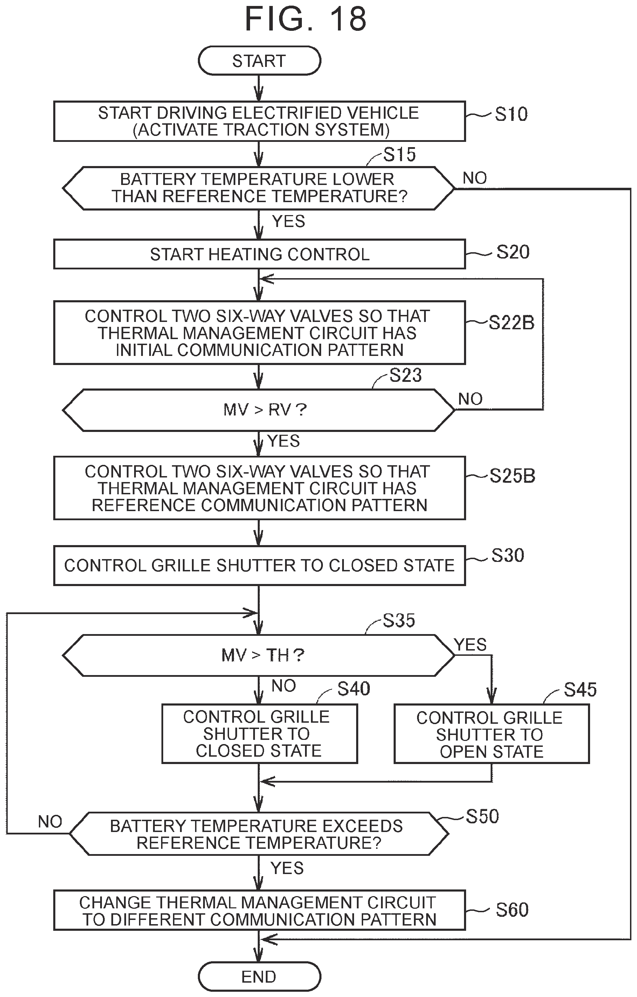

FIG. 18 is a flowchart illustrating a control method of the thermal management system 3. Referring to FIG. 18, this flowchart is different from the flowchart of the second embodiment (FIG. 13) in that S22B and S25B are performed instead of S22A and S25A, respectively. This flowchart is otherwise the same as the flowchart of the second embodiment.

After S20, the ECU 520 controls the six-way valves 380, 390 so that the thermal management circuit 300 has the initial communication pattern (FIG. 16) (S22B). Thereafter, when the value MV exceeds the reference value RV (Yes in S23), the ECU 520 controls the six-way valves 380, 390 so that the thermal management circuit 300 has the reference communication pattern (FIG. 17) (S25B).

Other configurations and effects of the third embodiment are the same as those of the second embodiment.

### First Modification of Third Embodiment

The ECU 520 may cause the reference communication pattern formed instead of the initial communication pattern when the traction system is activated (at the start of the heating control).

When heating of the vehicle cabin is requested, the ECU 520 may supply heat from the transaxle 263 to the heating circuit via the chiller 220 by driving the heating circuit with the reference communication pattern formed.

When the detected value from the temperature sensor 267 exceeds the detected value from the temperature sensor 273 during the heating control of the battery 272 with the reference communication pattern formed, the ECU 520 may control the six-way valves 380, 390 so that the flow path 270b is connected to the flow path 260b.

### Second Modification of Third Embodiment

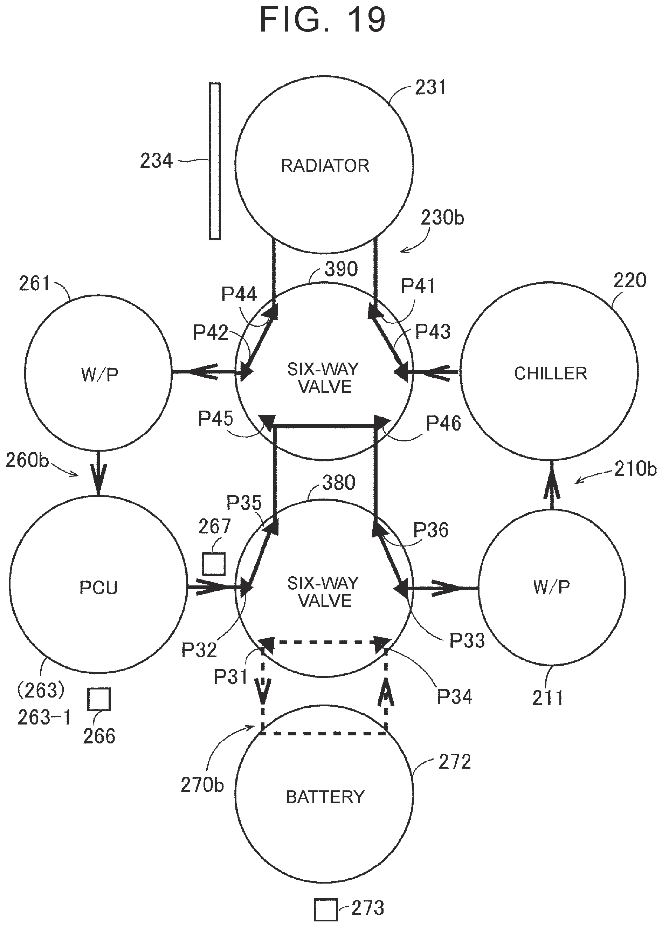

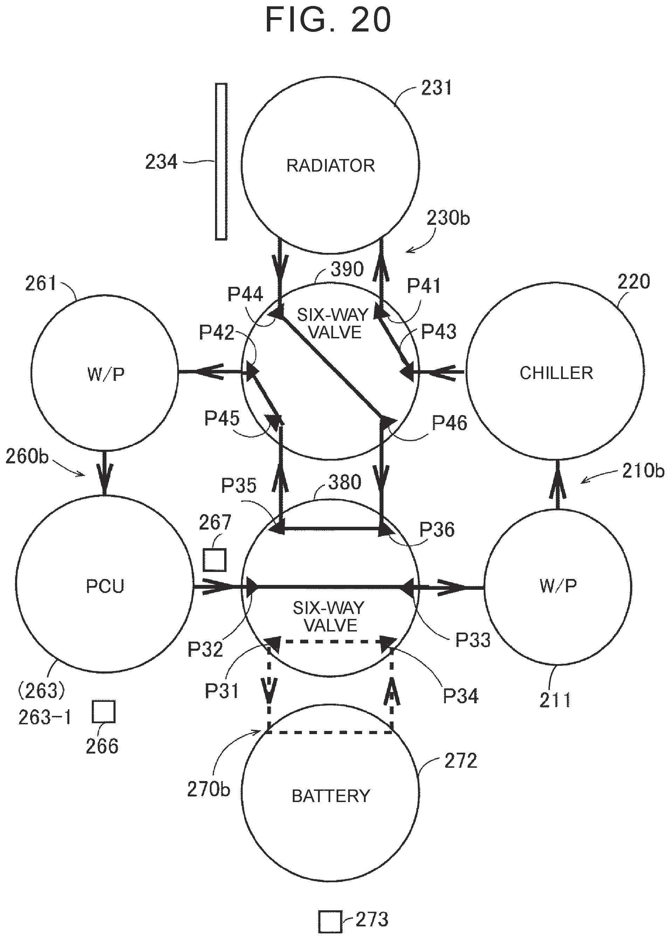

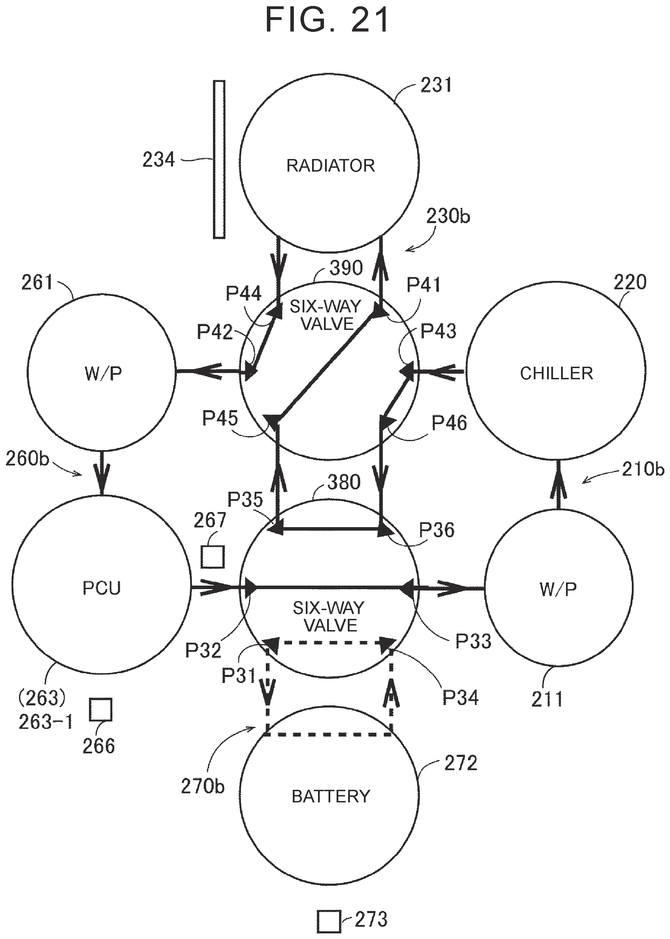

FIGS. 19, 20, and 21 illustrates other examples of the reference communication pattern of the thermal management circuit 300. Referring to FIGS. 19 to 21, the reference communication pattern is not limited to the pattern shown in FIG. 17 and may be the pattern shown in FIGS. 19, 20, or 21 as long as the flow path 270b is disconnected from and independent of the flow paths 210b, 230b, and 260b, the flow path 260b is connected to the flow paths 210b, 230b, and the flow path 230b is connected to the flow path 210b.

### Other Modifications

The first to third embodiments illustrate an example in which the heating control of the battery is performed at the start of driving of the electrified vehicle 1a (when the traction system is activated). However, the present disclosure is not limited to this.

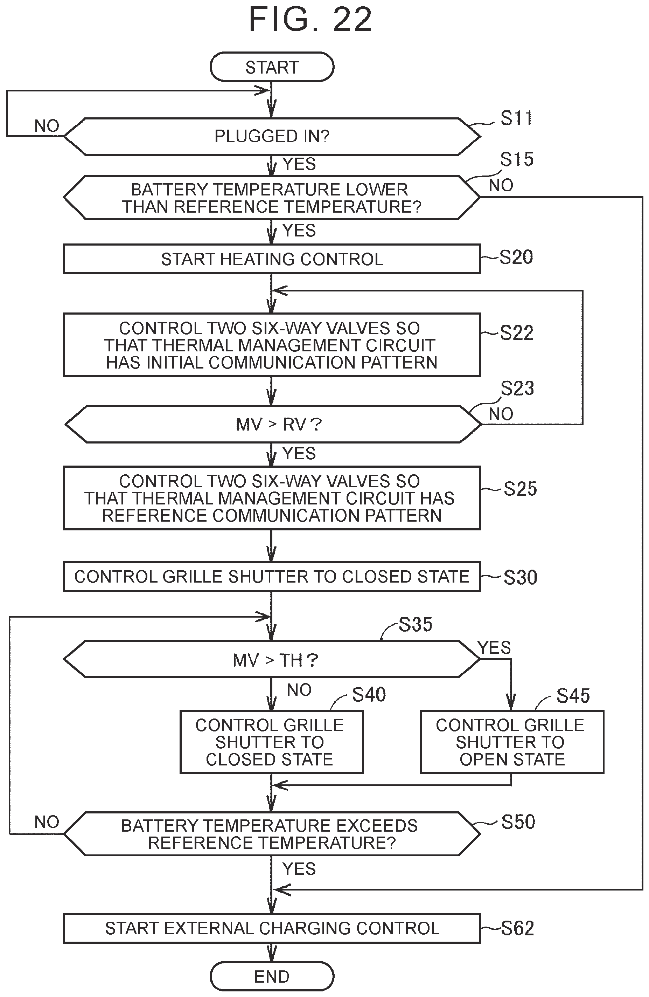

FIG. 22 is a flowchart illustrating a process that is performed by the ECU according a modification. Referring to FIG. 22, the ECU may perform the heating control so that the temperature of the battery 173 becomes equal to or higher than a predetermined reference temperature at the start of external charging (see S62 in FIG. 22). For example, in step S11, when the ECU detects that a charging plug of charging equipment is plugged in (inserted) into the inlet 178, the process proceeds to step S15. When it is determined in step S15 that the temperature of the battery 173 is equal to or higher than the reference temperature or when it is determined in step S50 that the temperature of the battery 173 exceeds the reference temperature, the process proceeds to step S62. In step S62, the ECU starts external charging control FIG. 22 illustrates an example in which plugging in triggers the battery heating control. However, the battery heating control may be started before plugging in. For example, the battery heating control may be started a predetermined time (e.g., 10 minutes) before the scheduled start time of external charging (scheduled start time of supplying charging power). In this example, the above control is representatively applied to the first embodiment. However, the above control may be applied to the second or third embodiment.

The first to third embodiments illustrate an example in which the thermal management system is mounted on an electrified vehicle. However, the present disclosure is not limited to this. The thermal management system may be mounted on an electrical apparatus different from an electrified vehicle (e.g., a stationary energy storage device).

The first embodiment illustrates an example in which the thermal management circuit 100 includes the high temperature circuit 110. However, the present disclosure is not limited to this. The thermal management circuit 100 may not include the high temperature circuit 110.

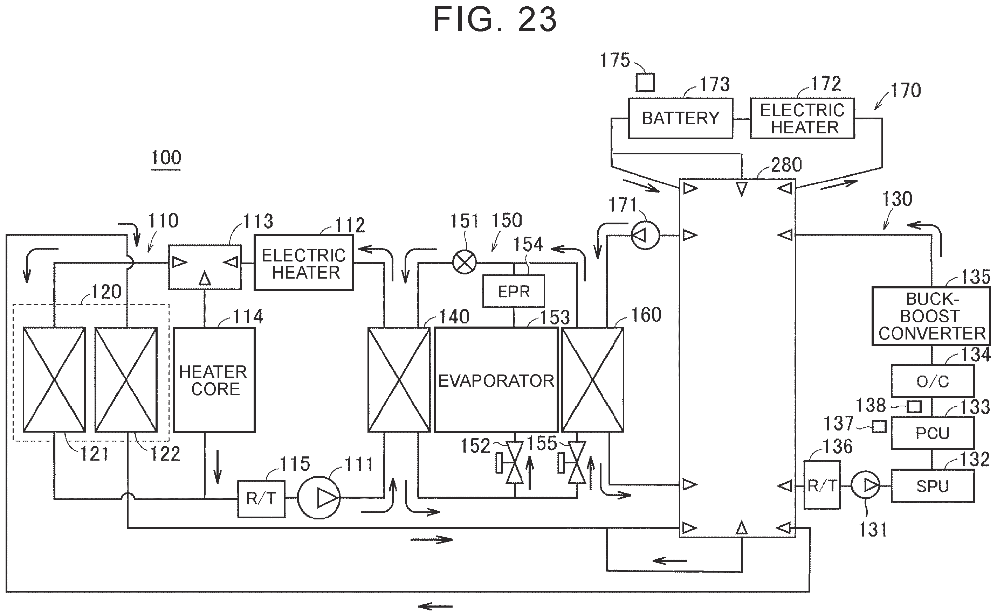

The second embodiment illustrates an example in which the thermal management circuit 200 includes the ten-way valve 280. However, the present disclosure is not limited to this. The thermal management circuit 100 may include the ten-way valve 280 (see FIG. 23).

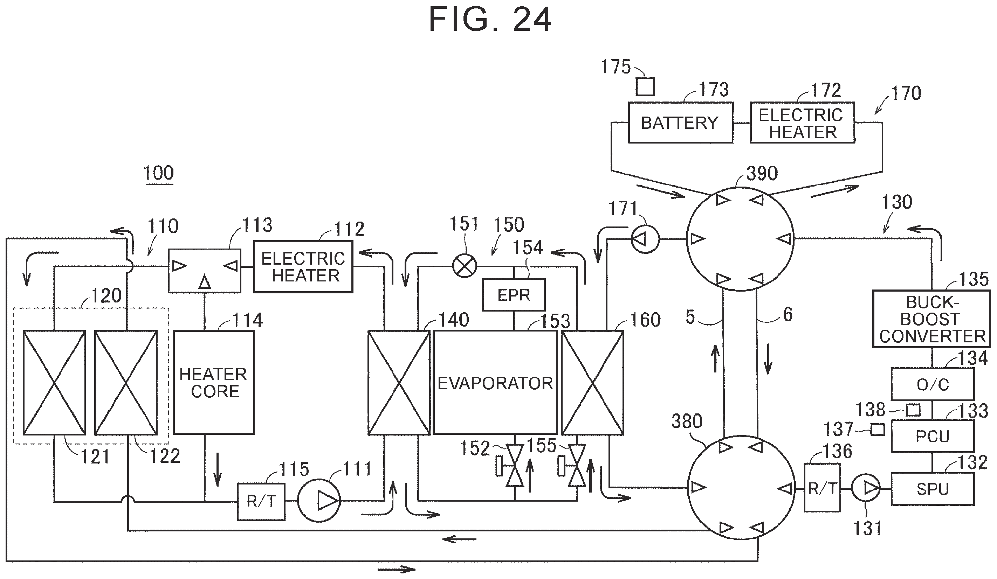

The third embodiment illustrates an example in which the thermal management circuit 300 includes the six-way valves 380, 390. However, the present disclosure is not limited to this. The thermal management circuit 100 may include the six-way valves 380, 390 (see FIG. 24).

The first to third embodiments illustrate an example in which the battery heating control is performed at the start of driving of the electrified vehicle 1a (when the traction system is activated). However, the present disclosure is not limited to this. The heating control need not necessarily be performed at the start of driving of the electrified vehicle 1a (when the traction system is activated). For example, the heating control may be performed when the battery temperature falls below a reference temperature. In this case, the ECU may acquire the detected value of the battery temperature at predetermined intervals (e.g., every hour).

The electrified vehicle 1a may be a hybrid electric vehicle (HEV), a plug-in hybrid electric vehicle (PHEV), or a fuel cell electric vehicle (FCEV). However, the thermal management system according to the present disclosure is not limited to vehicle applications.

### Battery Heating Control

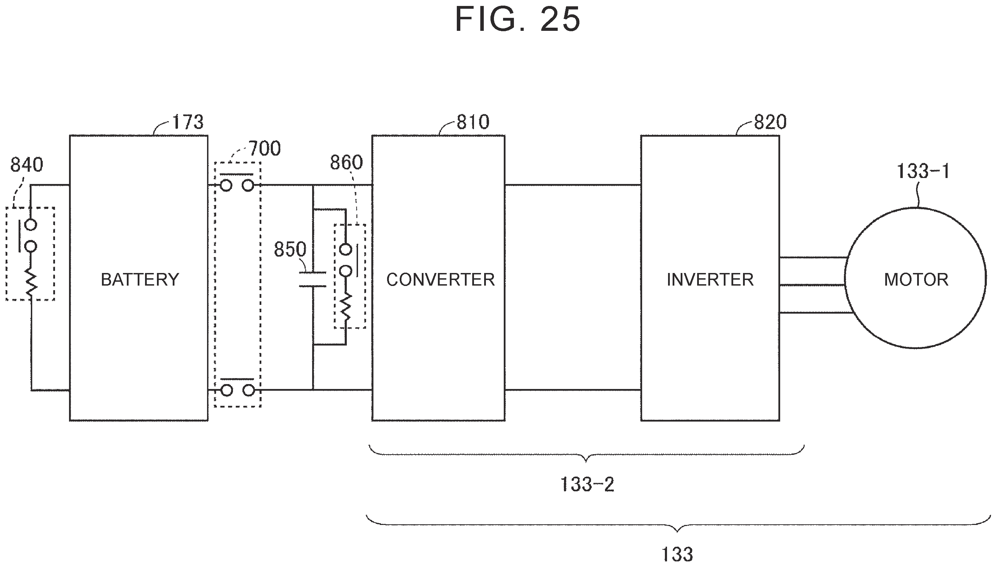

FIG. 25 illustrates the battery heating control in detail. Referring to FIG. 25, the PCU 133-2 includes a converter 810 and an inverter 820. The battery 173 is connected to the converter 810 via a system main relay (SMR) 700. The converter 810 is connected to the inverter 820. The inverter 820 is connected to the motor 133-1. A discharge circuit 840 including a switch and a resistive element is connected to the battery 173. A smoothing capacitor 850 is provided between the battery 173 and the converter 810. A discharge circuit 860 includes a switch and a resistive element, and is connected in parallel with the smoothing capacitor 850. FIG. 25 is representatively illustrated based on the configuration of the first embodiment. However, the same configuration may be applied to any of the second and third embodiments and their modifications.

The heating control of the battery 173 may include, for example, a control for electrically disconnecting the SMR 700 and turning on the switch of the discharge circuit 840. In this case, a current flows through a closed circuit formed by the battery 173 and the discharge circuit 840. The heating control of the battery 173 may include a control for turning off the switch of the discharge circuit 840 and turning on the SMR 700 and the switch of the discharge circuit 860. In this case, a current flows through a closed circuit formed by the battery 173, the SMR 700, and the discharge circuit 860. The heating control of the battery 173 may include a control for turning on the SMR 700 and turning off the switches of the discharge circuits 840, 860 to cause a current adjusted so that no torque is generated in the motor 133-1 to flow.

The embodiments disclosed herein should be construed as illustrative in all respects and not restrictive. The scope of the present disclosure is set forth in the claims rather than in the above description of the embodiments, and is intended to include all modifications within the meaning and scope equivalent to those of the claims.

## Claims

1. A thermal management system (1, 2, 3) mounted on an electrical apparatus (1a), the thermal management system (1, 2, 3) comprising:
a first flow path (170b, 270a, 270b), a second flow path (130b, 260a, 260b), a third flow path (130a, 230a, 230b), and a fourth flow path (170a, 210a, 210b), each configured to allow a heat medium to flow through;
an energy storage device (173, 272) configured to exchange heat with the heat medium in the first flow path (170b, 270a, 270b);
a drive device (133, 263) configured to exchange heat with the heat medium in the second flow path (130b, 260a, 260b) and generate a driving force;
a radiator (122, 231) located in the third flow path (130a, 230a, 230b);
a chiller device (160, 220) located in the fourth flow path (170a, 210a, 210b); and
a switching device (180, 190, 280, 380, 390) configured to switch a connection state between the first flow path (170b, 270a, 270b), the second flow path (130b, 260a, 260b), the third flow path (130a, 230a, 230b), and the fourth flow path (170a, 210a, 210b), wherein
the switching device (180, 190, 280, 380, 390) is configured to cause a switching circuit formed, the switching circuit being a circuit in which the first flow path (170b, 270a, 270b) is disconnected from and independent of the second flow path (130b, 260a, 260b), the third flow path (130a, 230a, 230b), and the fourth flow path (170a, 210a, 210b), the second flow path (130b, 260a, 260b) is connected to the third flow path (130a, 230a, 230b) and the fourth flow path (170a, 210a, 210b), and the third flow path (130a, 230a, 230b) is connected to the fourth flow path (170a, 210a, 210b), and wherein the switching device (180, 190, 280, 380, 390) is configured to cause the switching circuit formed when performing heating of the energy storage device (173, 272) by causing a current to flow through the energy storage device (173, 272).

2. The thermal management system (1, 2, 3) according to claim 1, wherein the electrical apparatus (1a) is an electrified vehicle.

3. The thermal management system (1, 2, 3) according to claim 2, wherein the energy storage device (173, 272) is heated after a traction system of the electrified vehicle is activated.

4. The thermal management system (1, 2, 3) according to claim 2, wherein:
the energy storage device (173, 272) is configured to be externally chargeable with charging power supplied from charging equipment external to the electrified vehicle; and
the energy storage device (173, 272) is heated at start of being externally charged in such a manner that a temperature of the energy storage device (173, 272) becomes equal to or higher than a predetermined temperature.

5. The thermal management system (1, 2, 3) according to any of claims 2 to 4, further comprising a grille shutter (124, 234) configured to open and close, and to adjust an amount of heat that is dissipated from the radiator (122, 231) to outside of the electrified vehicle, wherein the grille shutter (124, 234) is in a closed state when the switching circuit is formed.

6. The thermal management system (1, 2, 3) according to claim 5, further comprising a temperature sensor (137, 138, 266, 267) configured to detect a temperature related to a temperature of the drive device (133, 263), wherein the switching circuit is formed when a detected value from the temperature sensor exceeds a reference value.

7. The thermal management system (1, 2, 3) according to claim 6, wherein the grille shutter (124, 234) is switched from the closed state to an open state when the detected value from the temperature sensor (137, 138) exceeds a threshold higher than the reference value.

8. The thermal management system (1, 2, 3) according to any of claims 2 to 7, further comprising a heating circuit configured to exchange heat via the chiller device (160, 220) and to heat a vehicle cabin of the electrified vehicle, wherein when heating of the vehicle cabin is requested, heat from the drive device (133, 263) is supplied to the heating circuit via the chiller device (160, 220) as the heating circuit is driven with the switching circuit formed.

9. The thermal management system (1, 2, 3) according to any one of claims 1 to 8, further comprising:
a first temperature sensor (175, 273) configured to detect a temperature of the energy storage device (173, 272); and
a second temperature sensor (138, 267) configured to detect a temperature of the heat medium in the second flow path (130b, 260a, 260b), wherein the switching device (180, 190, 280, 380, 390) is configured to be switched in such a manner that the first flow path (170b, 270a, 270b) is connected to the second flow path (130b, 260a, 260b) when a detected value from the second temperature sensor (138, 267) exceeds a detected value from the first temperature sensor during the heating with the switching circuit formed.

10. The thermal management system (1, 2, 3) according to any of claims 1 to 9, further comprising a control device (500, 510, 520), wherein the control device (500, 510, 520) is configured to control the switching device (180, 190, 280, 380, 390) to cause the switching circuit formed.
